# EUROPEAN PATENT SPECIFICATION

(11) **EP 3 985 511 B1**
(45) Date of publication and mention of the grant of the patent: **18.03.2026**
(21) Application number: 21183809.9
(22) Date of filing: 05.07.2021
(51) Int. Cl.: G06F 9/50, H04L 41/042, H04L 41/044, H04L 41/16, H04L 41/342, H04L 41/5009, H04L 41/5019, H04L 41/50

(54) **ORCHESTRATION OF MESHES**
ORCHESTRIERUNG VON NETZEN
ORCHESTRATION DE MAILLES

(30) Priority: 25.09.2020 US 202017033116
(43) Date of publication of application: 20.04.2022
(60) Divisional application: 25218798.4
(73) Proprietor: INTEL Corporation, Santa Clara, CA 95054 (US)
(72) Inventor: DOSHI, Kshitij Arun, Tempe, AZ, 85282 (US); BARTFAI-WALCOTT, Katalin Klara, El Dorado Hills, CA, 95762 (US); GUIM BERNAT, Francesc, 08036 Barcelona (ES)
(74) Representative: Maiwald GmbH

(56) References cited:
- EP-A1- 3 337 094
- WO-A1-2018/014972
- US-A1- 2019 354 418
- US-A1- 2020 084 202

## Description

### FIELD OF THE DISCLOSURE

This disclosure relates generally to an edge computing environment, and, more particularly, to orchestration of meshes in an edge computing environment.

### BACKGROUND

EP3337094A1 describes a method and an apparatus for deploying a network service. It is described that the method includes: obtaining, by a primary orchestrator, a network service instantiation request, where the network service instantiation request is used to request the primary orchestrator to instantiate the network service; obtaining network service description information across orchestrator management domains; determining, according to the network service description information, a first virtualized network function that needs to be deployed in a management domain of a secondary orchestrator; and sending a virtualized network function instantiation request to the secondary orchestrator, where the virtualized network function instantiation request is used to request the secondary orchestrator to instantiate the first virtualized network function, where a management domain of the primary orchestrator is different from the management domain of the secondary orchestrator.

WO2018/014972A1 relates to a network system comprising a pending requests manager configured to receive a pending request for network resources and to make the pending request available for one or more secondary orchestrators of network resources, wherein the pending request is based on a service request for network resources and wherein at least some of the network resources specified in the service request are excluded from the pending request.

Edge computing resources can be used to execute services and other applications on behalf of a variety of tenants. Certain cloud systems can include multiple edges. Each edge is governed separately with different operators, different policies, different structures, etc. As such, it is difficult, if not impossible, to coordinate activities among multiple edges of a network infrastructure.

### SUMMARY

The invention and its scope of protection is defined by the appended independent claims. Claim 1 defines an orchestrator apparatus. Claim 9 defines a method of orchestrating execution of a service in an edge computing environment. Claim 12 defines a computer-readable medium.

### BRIEF DESCRIPTION OF THE DRAWINGS

FIG. 1 depicts an example environment of use including an example cloud environment, an example edge environment, and an example endpoint environment.
FIG. 2 is an overview of an example edge cloud configuration for edge computing.
FIG. 3 illustrates operational layers among endpoints, an edge cloud, and cloud computing environments.
FIG. 4 illustrates a block diagram of an example environment for networking and services in an edge computing system.
FIG. 5 illustrates deployment of a virtual edge configuration in an edge computing system operated among multiple edge nodes and multiple tenants.
FIG. 6 illustrates various compute arrangements deploying containers in an edge computing system.
FIG. 7 an example compute and communication use case involving mobile access to applications in an example edge computing system.
FIG. 8A is a block diagram of an example implementation of an example compute node that may be deployed in one of the edge computing systems illustrated in FIGS. 1-5 and/or 7.
FIG. 8B is another block diagram of an example implementation of an example compute node that may be deployed in one of the edge computing systems illustrated in FIGS. 1-5 and/or 7.
FIG. 9 shows an example edge architecture.
FIG. 10 is a block diagram of an example orchestration system for use with an example edge architecture such as the edge architecture of FIG. 9.
FIG. 11 illustrates an example network environment or infrastructure implemented with the example orchestration system of FIG. 10.
FIG. 12 illustrates another example network architecture to enable delegation of orchestration.
FIG. 13 is a block diagram of an example fog network including a fog management domain implemented in the cloud and/or on the edge.
FIG. 14 is an example network infrastructure in which a plurality of edge/cloud resources house a plurality of fog management domains to coordinate resource allocation, configuration, and/or other activity among a plurality of fog nodes.
FIG. 15 shows an example data flow between orchestrators and an attestation server to configure the orchestration delegate(s) and facilitate execution of a service and allocation of additional resource(s) to execute the service.
FIGS. 16-17 are flowcharts representative of example machine-readable instructions that can be executed to implement all or part of the example network computing infrastructure of FIGS. 10-15.
FIG. 18 is a block diagram of an example processor platform structured to execute the instructions of FIGS. 16-17 to implement the example network computing infrastructure of FIGS. 10-15.

The figures are not to scale. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

### DETAILED DESCRIPTION

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components. As used herein, "approximately" and "about" refer to dimensions that may not be exact due to manufacturing tolerances and/or other real world imperfections. As used herein "substantially real time" refers to occurrence in a near instantaneous manner recognizing there may be real world delays for computing time, transmission, etc. Thus, unless otherwise specified, "substantially real time" refers to real time +/- 1 second.

Edge computing, at a general level, refers to the transition of compute and storage resources closer to endpoint devices (e.g., consumer computing devices, user equipment, etc.) in order to optimize total cost of ownership, reduce application latency, improve service capabilities, and improve compliance with security or data privacy requirements. Edge computing may, in some scenarios, provide a cloud-like distributed service that offers orchestration and management for applications among many types of storage and compute resources. As a result, some implementations of edge computing have been referred to as the "edge cloud" or the "fog", as powerful computing resources previously available only in large remote data centers are moved closer to endpoints and made available for use by consumers at the "edge" of the network.

Edge computing use cases in mobile network settings have been developed for integration with Multi-access Edge Computing (MEC) approaches, also known as "mobile edge computing." MEC approaches are designed to allow application developers and content providers to access computing capabilities and an information technology (IT) service environment in dynamic mobile network settings at the edge of the network. Limited standards have been developed by the European Telecommunications Standards Institute (ETSI) industry specification group (ISG) in an attempt to define common interfaces for operation of MEC systems, platforms, hosts, services, and applications.

Edge computing, satellite edge computing (e.g., edge nodes connected to the Internet via satellite), MEC, and related technologies attempt to provide reduced latency, increased responsiveness, and more available computing power than offered in traditional cloud network services and wide area network connections. However, the integration of mobility and dynamically launched services to some mobile use and device processing use cases has led to limitations and concerns with orchestration, functional coordination, and resource management, especially in complex mobility settings where many participants (e.g., devices, hosts, tenants, service providers, operators, etc.) are involved.

In a similar manner, Internet of Things (IoT) networks and devices are designed to offer a distributed compute arrangement from a variety of endpoints. IoT devices can be physical or virtualized objects that may communicate on a network, and can include sensors, actuators, and other input/output components, which may be used to collect data or perform actions in a real-world environment. For example, IoT devices can include low-powered endpoint devices that are embedded or attached to everyday things, such as buildings, vehicles, packages, etc., to provide an additional level of artificial sensory perception of those things. IoT devices have become more popular and thus applications using these devices have proliferated.

In some examples, an edge environment can include an enterprise edge in which communication with and/or communication within the enterprise edge can be facilitated via wireless and/or wired connectivity. The deployment of various Edge, Fog, MEC, and IoT networks, devices, and services have introduced a number of advanced use cases and scenarios occurring at and towards the edge of the network. However, these advanced use cases have also introduced a number of corresponding technical challenges relating to security, processing and network resources, service availability and efficiency, among many other issues. One such challenge is in relation to Edge, Fog, MEC, and IoT networks, devices, and services executing workloads on behalf of endpoint devices including establishing provenance to determine data integrity and/or data restrictions.

The present techniques and configurations may be utilized in connection with many aspects of current networking systems, but are provided with reference to Edge Cloud, IoT, MEC, and other distributed computing deployments. The following systems and techniques may be implemented in, or augment, a variety of distributed, virtualized, or managed edge computing systems. These include environments in which network services are implemented or managed using MEC, fourth generation (4G) or fifth generation (5G) wireless network configurations; or in wired network configurations involving fiber, copper, and/or other connections. Further, aspects of processing by the respective computing components may involve computational elements which are in geographical proximity of user equipment or other endpoint locations, such as a smartphone, vehicular communication component, IoT device, etc. Further, the presently disclosed techniques may relate to other Edge/MEC/IoT network communication standards and configurations, and other intermediate processing entities and architectures.

Edge computing is a developing paradigm where computing is performed at or closer to the "edge" of a network, typically through the use of a computing platform implemented at base stations, gateways, network routers, or other devices which are much closer to end point devices producing and consuming the data. For example, edge gateway servers may be equipped with pools of memory and storage resources to perform computations in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with computing hardware that performs virtualized network functions and offers compute resources for the execution of services and consumer functions for connected devices.

Edge environments include networks and/or portions of networks that are located between a cloud environment and an endpoint environment. Edge environments enable computations of workloads at edges of a network. For example, an endpoint device (e.g., a user device) may request a nearby base station to compute a workload rather than a central server in a cloud environment. Edge environments include edge services (e.g., an edge platform for hire (EPH)), which include pools of memory, storage resources, and processing resources. In some examples, edge environments may include an edge as a service (EaaS), which may include one or more edge services. Edge services perform computations, such as an execution of a workload, on behalf of other edge services, edge nodes (e.g., EPH nodes), endpoint devices, etc. Edge environments facilitate connections between producers (e.g., workload executors, edge services) and consumers (e.g., other edge services, endpoint devices).

Because edge services may be closer in proximity to endpoint devices than centralized servers in cloud environments, edge services enable computations of workloads with a lower latency (e.g., response time) than cloud environments. Edge services may also enable a localized execution of a workload based on geographic locations or network topographies. For example, an endpoint device may require a workload to be executed in a first geographic area, but a centralized server may be located in a second geographic area. The endpoint device can request a workload execution by an edge service located in the first geographic area to comply with corporate or regulatory restrictions.

Examples of workloads to be executed in an edge environment (e.g., via an EaaS, via an edge service, on an EPH node, etc.) include autonomous driving computations, video surveillance monitoring, machine learning model executions, and real time data analytics. Additional examples of workloads include delivering and/or encoding media streams, measuring advertisement impression rates, object detection in media streams, speech analytics, asset and/or inventory management, and augmented reality processing.

In some examples, edge services enable both the execution of workloads and a return of a result of an executed workload to endpoint devices with a response time lower than the response time of a server in a cloud environment. For example, if an edge service is located closer to an endpoint device on a network than a cloud server, the edge service may respond to workload execution requests from the endpoint device faster than the cloud server. An endpoint device may request an execution of a time-constrained workload from an edge service rather than a cloud server.

In addition, edge services enable the distribution and decentralization of workload executions. For example, an endpoint device may request a first workload execution and a second workload execution. In some examples, a cloud server may respond to both workload execution requests. With an edge environment, however, a first edge service may execute the first workload execution request, and a second edge service may execute the second workload execution request.

Additional infrastructure may be included in an edge environment to facilitate the execution of workloads on behalf of endpoint devices. For example, an orchestrator may access a request to execute a workload from an endpoint device and provide offers to a plurality of edge nodes. The offers may include a description of the workload to be executed and terms regarding energy and resource constraints. An edge node (e.g., an EPH node) may accept the offer, execute the workload, and provide a result of the execution to infrastructure in the edge environment and/or to the endpoint device.

Delivery of services in an Edge as a Service (EaaS) ecosystem (e.g., in an edge environment, via an EPH, via an edge infrastructure element, etc.) may include a business model where subscribers to the EaaS service (e.g., endpoint devices, user devices, etc.) pay for access to edge services. In some examples, the endpoint devices may pay for edge services (such as an execution of a workload) via micro-payments, credits, tokens, e-currencies, etc. In some examples, revenue models may include mobile network operators (MNOs) that maintain subscriptions from a subscriber base (such as one or more networks) as a way to pay for edge services by entering into service-level agreement (SLA) contracts. An SLA can include one or more service level objectives (SLOs), for example. An SLO can include a metric such as uptime, response time, etc. In certain examples, SLA correspond to resources used to achieve a type of SLO. For example, SLA specifies a number of cores, memory bandwidth, etc., to achieve an SLO of 30 frames per second of an artificial intelligence model, etc. Accounting executed and/or managed by the MNO may determine billable services that are then applied to subscriber accounts.

In certain examples, a single resource or entity can negotiate and manage multiple SLA in an edge environment while managing its resources using one or more SLOs. A SLO is based in an edge cloud environment, for example. The SLO can be instantiated inside a service. The SLA is instantiated within an associated resource. Multiple SLA may compete for particular resources. In certain examples, SLAs can be grouped with an associated level of trust. Grouping of SLAs can be dynamic, based on requirement, trust, user/device type, etc. A group key can be associated with the SLAs, for example.

The rapid growth of edge computing presents a challenge and an opportunity for software engineering practices at scale. For example, debugging, A/B testing, correlating anomalies, ruling out factors as causes of bugs and/or failures, establishing patterns among faults and failures, etc., are complicated operations across large numbers of independently developed microservices that work in concert to deliver end-user value. Further, these problems are complicated at the edge of the network, where the computing infrastructure is heterogeneous, different systems are maintained in different locations and subject to different failure profiles, timing anomalies are more likely due to non-uniform communication and non-localized placements, and other obfuscating factors, such as power-constrained and bandwidth-constrained distribution of tasks, exist. Adding to these complications is the problem that different edge locations can belong to different trust boundaries. As such, a chain of actions that spans different microservices in loosely-coupled interactions can also be transparent, semi-transparent, or opaque when attempting to correlate data and statistics to trace execution of software/program code, collect debugging information for execution of the software code, etc. As used herein, the terms "microservice, "service", "task", "operation", and "function" can be used interchangeably to indicate an application, a process, and/or other software code (also referred to as program code) for execution using computing infrastructure, such as the edge computing environment.

Examples disclosed herein provide delegated orchestration to manage and orchestrate services across entities in a cloud or edge environment. An orchestrator in a cloud and/or edge environment is a resource manager for an application or other executable service. The orchestrator manages interconnections and interactions among services and/or resources in the cloud/edge environment. The orchestrator can manage resources, distribute workload, and/or otherwise help ensure proper execution of the service (e.g., according to an SLA, etc.). Certain examples provide delegated orchestration across a multi-edge architecture including a set of different end to end edge deployments belonging to different entities and orchestrated separately. Certain examples enable edge owners to maintain control of scheduling and managing a service through its lifecycle even after submitting the service for execution by another edge entity. A plurality of orchestrators form a mesh to manage resources for execution of services across the multi-edge architecture. An orchestrator controls the mesh of orchestrators.

Edge cloud systems can be arranged in an orchestration hierarchy (e.g., in orchestration domains). At large scales, the orchestration hierarchy of domains can lead to bottlenecks in orchestration functions executed by the system. For example, complex orchestration functions can involve machine learning, which can reduce latency, conserve bandwidth, improve privacy, and enable smarter applications when deployed in an edge computing environment. However, the orchestration domain hierarchy can reduce or eliminate those benefits and make it difficult for a machine learning model to operate across orchestration domains. Rather than requiring each orchestration domain to push down control based on a fixed hierarchy, certain examples enable orchestrators to become part of an "orchestration mesh" in which orchestration functions are dynamically organized and can be passed, propagated, or transferred from one orchestrator to another orchestrator.

As such, services and/or containers hosting such services can be coordinated using an orchestrator of orchestrators in an edge cloud computing environment. In certain examples, services can dynamically be moved to different edge locations in the edge cloud environment, and associated orchestrator(s) can move with the services among edge computing nodes and/or other locations to facilitate trusted, stable execution of services. An orchestration application programming interface (API) and associated open stack cluster can be used to manage services as the services (and associated orchestrator(s)) migrate across computing resources in the edge cloud environment. Thus, orchestration privileges can be distributed dynamically across available edge cloud geography, and a level of security and trust is maintained throughout the mesh, cluster, or grouping of orchestrators.

For example, to execute a service and fulfill an SLA and/or associated SLOs, an orchestrator can move the service from one edge or cloud computing resource to another edge/cloud computing resource to satisfy SLA and/or SLO requirements. A mesh or other cluster of orchestrators can be employed (e.g., coordinated by an orchestrator of the mesh of orchestrators, etc.) to transfer control of the service from a first orchestrator to a second orchestrator when the service moves from a first resource to a second resource for execution, for example.

In certain examples, ontologies provide a distributable orchestration function for orchestrators to provide cross-platform consistency that enables a resource X at node 1 to be substituted for resource Y at node 2. For example, resource X may be a high-end field programmable gate array (FPGA) with high cost and high demand, and resource Y may be a graphics processing unit (GPU)-based software library that can deliver a lower cost, small queuing time, but with a lesser overall rate of processing. Service ontologies can help to decide whether the service can use resource X instead of resource Y and can help the orchestrator make such a decision quickly in hardware.

Thus, a management domain can be connected to an edge device, and edge devices and/or other resources can be connected to share requirements, workflow and/or workload information, etc., to achieve an SLA. Connected devices and associated orchestrators in the management domain can negotiate to transfer or "hand off" tasks such that one resource completes a subset of tasks and another resource completes another subset of tasks to distribute work (e.g., based on a token pass between the resources, etc.) until an SLA is achieved.

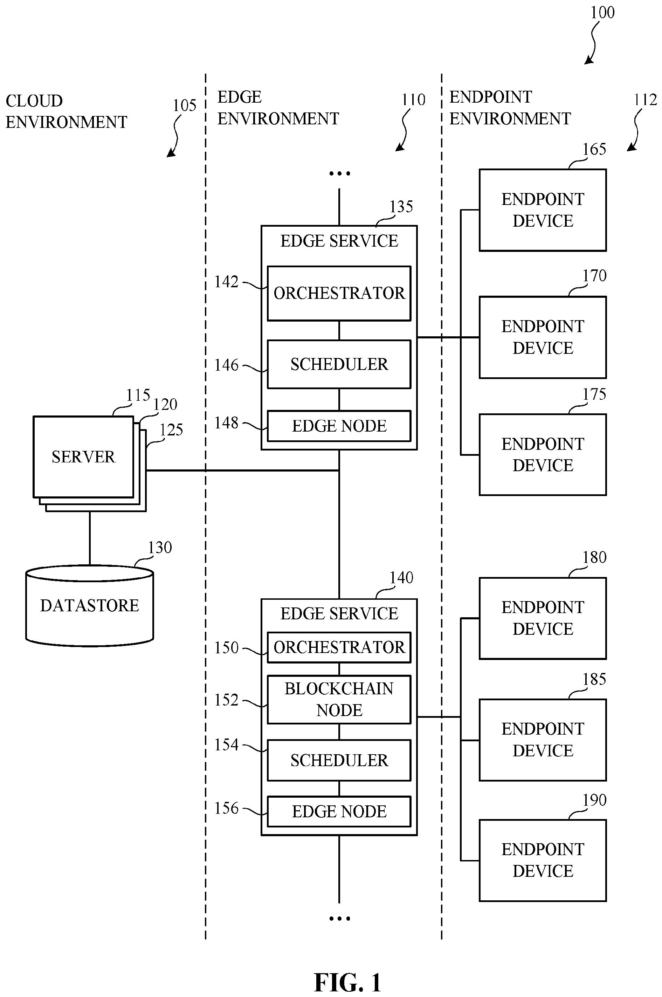

FIG. 1 depicts an example environment 100 of use including an example cloud environment 105, an example edge environment 110, and an example endpoint environment 112. Services can execute and/or otherwise exist in one or more of the example cloud environment 105, the example edge environment 110, and the example endpoint environment 112. The cloud environment 105 includes a first example server 115, a second example server 120, a third example server 125, and an example datastore 130. The servers 115, 120, 125 can execute centralized applications (e.g., website hosting, data management, machine learning model applications, responding to requests from client devices, etc.). The datastore 130 can store information such as database records, website requests, machine learning models, results of executing machine learning models, other service execution results, traces, code, etc.

While the example of FIG. 1 shows three servers 115-125 included in the cloud environment 105, the cloud environment 105 can include any number of servers. Likewise, while the cloud environment 105 includes one datastore, any number of datastores can be included in the cloud environment 105. The servers 115, 120, 125 can communicate to devices in the edge environment 110 and/or the endpoint environment 112 via a network such as the Internet. The datastore 130 can provide and/or store data records in response to requests from devices in the cloud environment 105, the edge environment 110, and/or the endpoint environment 112.

The edge environment 110 (e.g., an edge infrastructure) includes a first example edge service 135 and a second example edge service 140. In the illustrated example of FIG. 1, the first edge service 135 corresponds to a first EPH and the second edge service 140 corresponds to a second EPH. The first edge service 135 includes an example orchestrator 142, an example scheduler 146, and an example edge node 148 corresponding to a first example EPH node. The second edge service 140 includes an example orchestrator 150, an example blockchain node 152, an example scheduler 154, and an example edge node 156 corresponding to a second example EPH node. The edge services 135, 140 are in communication with each other and with the servers 115, 120, 125 in the cloud environment 105. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. While the example orchestrator 142, 150 and the example scheduler 146, 154 are shown implemented in the example edge environment 110, the orchestrator 142, 150 and/or the example scheduler 146, 154 can exist in the cloud environment 105, the edge environment 110, and/or the endpoint environment 112.

The edge services 135, 140 can execute workloads on behalf of devices located in the cloud environment 105, the edge environment 110, and/or the endpoint environment 112. The edge services 135, 140 can communicate with devices in the environments 105, 110, 112 (e.g., the first server 115, the datastore 130, etc.) via a network such as the Internet. Further, the edge services 135 can communicate with elements in the environments 105, 110, 112 wirelessly (e.g., via cellular communications, satellite communications, etc.). For example, the edge service 135 can be connected to (e.g., in communication with) a cellular base station included in the cloud environment 105 and connected to the first server 115. As used herein, the phrase "connected to," including variations thereof, encompasses direct communication and/or indirect communication between devices that are connected.

The endpoint environment 112 includes a first example endpoint device 165, a second example endpoint device 170, a third example endpoint device 175, a fourth example endpoint device 180, a fifth example endpoint device 185, and a sixth example endpoint device 190. In the example illustrated in FIG. 1, the first endpoint device 165, the second endpoint device 170, and the third endpoint device 175 are connected to the first edge service 135. Similarly, in the illustrated example, the fourth endpoint device 180, the fifth endpoint device 185, and the sixth endpoint device 190 are connected to the second edge service 140. However, the endpoint devices 165, 170, 175, 180, 185, 190 can be connected to any number of edge services, servers (e.g., the servers 115, 120, 125), and/or any other suitable devices included in the environments 105, 110, 112. For example, the first endpoint device 165 can be connected to the edge services 135, 140 and to the second server 120. Any of the endpoint devices 165, 170, 175, 180, 185, 190 can connect to devices in the environments 105, 110, 112 via a network such as the Internet. In some examples, the endpoint devices 165, 170, 175, 180, 185, 190 can be connected to one or more cellular base stations included one of the environments 105, 110, 112. For example, the first endpoint device 165 can be connected to a cellular base station included in the edge environment 110, and the cellular base station can be connected to the first edge service 135. Further, any number of endpoint devices may be included in the endpoint environment 112. In some examples, one or more of the endpoint devices 165, 170, 175, 180, 185, 190 can be a user device, such as a smartphone, a personal computer, a tablet, etc.

In response to a request to execute a workload from an endpoint device (e.g., the endpoint device 165), an orchestrator (e.g., the orchestrator 142) communicates with at least one edge node (e.g., the edge node 148) and an endpoint device (e.g., the endpoint device 165) to create a contract (e.g., an SLA) associated with a description of the workload to be executed. The orchestrator 142 can communicate with one or more other orchestrators and/or a primary orchestrator to execute all or part of the workload, for example. The edge node 148 provides an execution environment for a task associated with the contract and the description of the workload to the orchestrator 142. The scheduler (e.g., the scheduler 146) provides resources for a service (e.g., the edge service 135) running with respect to the edge node 148 to execute the task while meeting requirements (e.g., service level agreement requirements, etc.) of the endpoint device 165. The task can include the contract and the description of the workload to be executed. In some examples, the task can include tokens (such as a micro-payment, an e-currency) to acquire resources used to execute a workload. In some examples, the task can include a count of tokens to be provided in response to an execution of a workload.

In certain examples, transactions, traces, error detection, remediation, etc., can be stored and tracked in a distributed ledger such as a blockchain, etc. A blockchain node (e.g., the blockchain node 152) maintains records and/or logs of actions occurring in the environments 105, 110, 112. In some examples, the blockchain node 152 can include a Merkle tree, and the blockchain node 652 can supply proof of delivery of a contract, bid, offer, result, etc., for parties involved in transactions, such as the endpoint device 165, the orchestrator 142, the edge node 148, and/or any devices included in the environments 105, 110, 112. For example, the edge node 148 can notify receipt of a workload description to the blockchain node 152. Any of the orchestrators 142, 150, the workload schedulers 146, 154, and/or the edge nodes 148, 156 can provide records of actions and/or tokens to the blockchain nodes 144, 152. For example, the orchestrator 142 can provide a record of receiving a request to execute a workload (e.g., a contract request provided by the endpoint device 165) to the blockchain node(s) 152. The blockchain node 152 can be implemented as a centralized server in the cloud environment 105, for example. Further, any device in the environment 100 (e.g., the endpoint device 165) can provide records and/or tokens to the blockchain node 152. For example, an endpoint device 165 can accept a contract (such as an SLA, an e-contract, etc.) provided by the orchestrator 142 and provide a notice of contract acceptance to the blockchain node 152. In some examples, the blockchain node 152 can be implemented as a service hosted by a centralized server (e.g., the first server 115).

The scheduler 146 accesses a task from the orchestrator 142 and provides the task to the edge node 148. The edge node 148 executes the workload based on a description of the workload included in the task. The scheduler 146 accesses a result of the execution of the workload and/or tokens from the edge node 148. The scheduler 146 provides the result to the endpoint device 165. In some examples, the scheduler 146 retains a portion of the tokens accessed from the edge node 148 and/or provides the tokens to the orchestrator 142, the endpoint device 165, and/or resource providers.

The edge node 148 accesses a task from the scheduler 146 and executes a workload based on a description of the workload included in the task. The edge node 148 provides at least one result of the execution of the workload to the scheduler 146 and distributes tokens to resource providers, such as energy provider and/or an EPH provider. In some examples, an EPH provider can provide infrastructure services (e.g., maintenance, device support, datacenter services, space allocation, etc.) to an EPH node. In some examples, the edge nodes 148, 156 can provide tokens to the schedulers 146, 154 in response to determining that contract terms associated with an execution of a workload are not met. In some examples, in response to determining that contract terms are not met, the edge nodes 148, 156 can request additional tokens from the schedulers 146, 154, the orchestrators 142, 150, and/or the endpoint device 165.

In the example illustrated in FIG. 1, the orchestrator 142, the scheduler 146, and the edge node 148 are included in the edge service 135. However, in some examples, the orchestrator 142, scheduler 146, and/or the edge node 148 are included in the edge environment 110 rather than in the edge service 135. For example, the orchestrator 142 can be connected to the cloud environment 105 and/or the endpoint environment 112 outside of the edge service 135. In another example, the orchestrator 142, the scheduler 146, and/or the edge node 148 is/are separate devices included in the edge environment 110. Further, any of the orchestrator 142, the scheduler 146, or the edge node 148 can be included in the cloud environment 105 or the endpoint environment 112. For example, the orchestrator 142 can be included in the endpoint environment 112, in the first server 115 in the cloud environment 105, etc. In some examples, the scheduler 146 can be included in the orchestrator 142 rather than in the edge service 135. In some examples, the edge services 135, 140 can be distributed and performed among two or more peer devices (such as two or more edge servers) included in the edge environment 110.

An execution of a workload in the edge environment 110 can reduce computation costs and/or processing time used to execute the workload relative to an execution of the workload in the cloud environment 105. For example, an endpoint device 165-190 can request an edge service 135, 140 to execute a workload at a cost lower than a cost needed to execute the workload in the cloud environment 105. In some examples, multiple edge services 135, 140 can compete to receive a task to execute a workload, and each edge service 135, 140 can provide a bid including a workload execution cost to the orchestrator 142 and/or to the endpoint device 165. Each bid can include a different workload execution cost, and an edge service 135, 140 can lower a respective workload execution cost relative to other bids in order to be selected to execute the workload. Thus, a workload execution cost in the edge environment 110 may be lower than a workload execution cost in the cloud environment 105 provided by a centralized server (e.g., the first server 115).

In another example, an endpoint device 165-190 can be nearer to an edge service 135, 140 than a centralized server in the cloud environment 105. For example, the edge service 135 is closer in proximity to the endpoint device 165 than the first server 115. As a result, the endpoint device 165 can request the edge service 135 to execute a workload, and the response time of the edge service 135 to deliver the executed workload result is lower than that of the first server 115 in the cloud environment 105.

Consistent with the examples provided herein, an endpoint device (e.g., one of the endpoint devices 165, 170, 175, 180, 185, 190) can be implemented as any type of endpoint component, device, appliance, or other thing capable of communicating as a producer or consumer of data. For example, an endpoint device can include a mobile phone, a laptop computer, a desktop computer, a processor platform in an autonomous vehicle, etc. In additional or alternative examples, an endpoint device can include a camera, a sensor, etc. Further, the label "platform," "node," and/or "device" as used in the environment 100 does not necessarily mean that such platform, node, and/or device operates in a client or slave role; rather, any of the platforms, nodes, and/or devices in the environment 100 refer to individual entities, platforms, nodes, devices, and/or subsystems which include discrete and/or connected hardware and/or software configurations to facilitate and/or use the edge environment 110.

In some examples, the edge environment 110 is formed from network components and functional features operated by and within the edge services 135 (e.g., the orchestrator 142, the edge node 148, etc.). The edge environment 110 can be implemented as any type of network that provides edge computing and/or storage resources which are proximately located to radio access network (RAN) capable endpoint devices (e.g., mobile computing devices, IoT devices, smart devices, etc.), which are shown in FIG. 1 as the endpoint devices 165, 170, 175, 180, 185, 190. In other words, the edge environment 110 can be envisioned as an "edge" which connects the endpoint devices 165, 170, 175, 180, 185, 190 and traditional network access points that serves as an ingress point into service provider core networks, including mobile carrier networks (e.g., Global System for Mobile Communications (GSM) networks, Long-Term Evolution (LTE) networks, 5G and/or Sixth Generation (6G) networks, etc.), while also providing storage and/or compute capabilities. Other types and forms of network access (e.g., Wi-Fi, long-range wireless, wired networks including optical networks, etc.) can also be utilized in place of or in combination with such 3rd Generation Partnership Project (3GPP) carrier networks.

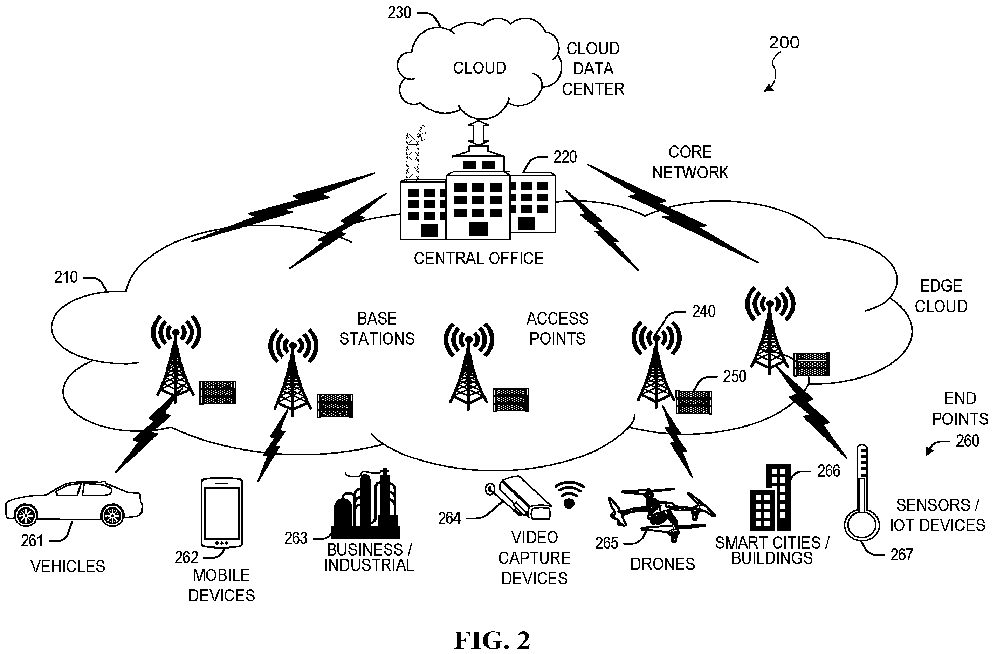

FIG. 2 is a block diagram 200 showing an overview of another configuration for edge computing, which includes a layer of processing referred to in many of the following examples as an "edge cloud". As shown, the edge cloud 210 is co-located at an edge location, such as an access point or base station 240, a local processing hub 250, or a central office 220, and, thus, may include multiple entities, devices, and equipment instances. The edge cloud 210 is located much closer to the endpoint (consumer and producer) data sources 260 (e.g., autonomous vehicles 261, user equipment 262, business and industrial equipment 263, video capture devices 264, drones 265, smart cities and building devices 266, sensors and IoT devices 267, etc.) than the cloud data center 230. Compute, memory, and storage resources which are offered at the edges in the edge cloud 210, are critical to providing ultra-low latency response times for services and functions used by the endpoint data sources 260 as well as reduce network backhaul traffic from the edge cloud 210 toward cloud data center 230, thus improving energy consumption and overall network usage, among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., UEs), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

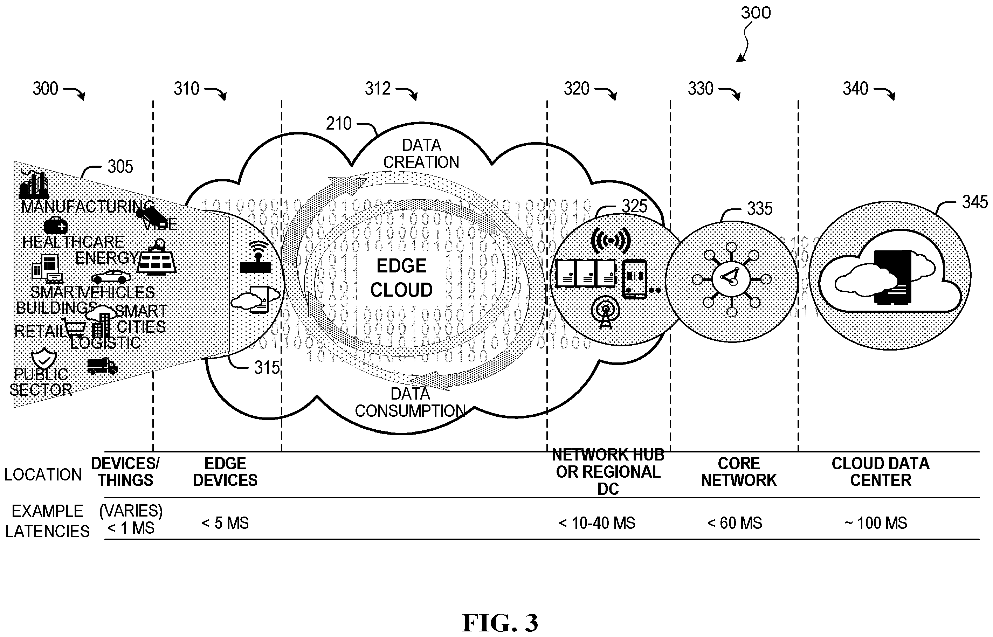

FIG. 3 illustrates operational layers among endpoints, an edge cloud, and cloud computing environments. Specifically, FIG. 3 depicts examples of computational use cases 305, utilizing the edge cloud 210 among multiple illustrative layers of network computing. The layers begin at an endpoint (devices and things) layer 300, which accesses the edge cloud 210 to conduct data creation, analysis, and data consumption activities. The edge cloud 210 may span multiple network layers, such as an edge devices layer 310 having gateways, on-premise servers, or network equipment (nodes 315) located in physically proximate edge systems; a network access layer 320, encompassing base stations, radio processing units, network hubs, regional data centers, or local network equipment (equipment 325); and any equipment, devices, or nodes located therebetween (in layer 312, not illustrated in detail). The network communications within the edge cloud 210 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 300, under 5 ms at the edge devices layer 310, to even between 10 to 40 ms when communicating with nodes at the network access layer 320. Beyond the edge cloud 210 are core network 330 and cloud data center 340 layers, each with increasing latency (e.g., between 50-60 ms at the core network layer 330, to 100 or more ms at the cloud data center layer). As a result, operations at a core network data center 335 or a cloud data center 345, with latencies of at least 50 to 100 ms or more, will not be able to accomplish many time-critical functions of the use cases 305. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 3**Fehler! Verweisquelle konnte nicht gefunden werden.35** or a cloud data center 345, a central office or content data network may be considered as being located within a "near edge" layer ("near" to the cloud, having high latency values when communicating with the devices and endpoints of the use cases 305), whereas an access point, base station, on-premise server, or network gateway may be considered as located within a "far edge" layer ("far" from the cloud, having low latency values when communicating with the devices and endpoints of the use cases 305). It will be understood that other categorizations of a particular network layer as constituting a "close", "local", "near", "middle", or "far" edge may be based on latency, distance, number of network hops, or other measurable characteristics, as measured from a source in any of the network layers 300-340.

The various use cases 305 may access resources under usage pressure from incoming streams, due to multiple services utilizing the edge cloud. To achieve results with low latency, the services executed within the edge cloud 210 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation and (2) augment other components in the system to resume overall transaction SLA and (3) implement steps to remediate.

Thus, with these variations and service features in mind, edge computing within the edge cloud 210 may provide the ability to serve and respond to multiple applications of the use cases 305 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.) which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power is used to deliver greater memory bandwidth. Likewise, improved security of hardware and root of trust trusted functions are also required because edge locations may be unmanned and may even need permissioned access (e.g., when housed in a third-party location). Such issues are magnified in the edge cloud 210 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 210 (network layers 300-340), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 210.

As such, the edge cloud 210 is formed from network components and functional features operated by and within edge gateway nodes, edge aggregation nodes, or other edge compute nodes among network layers 310-330. The edge cloud 210 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 210 may be envisioned as an "edge" which connects the endpoint devices and traditional network access points that serves as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

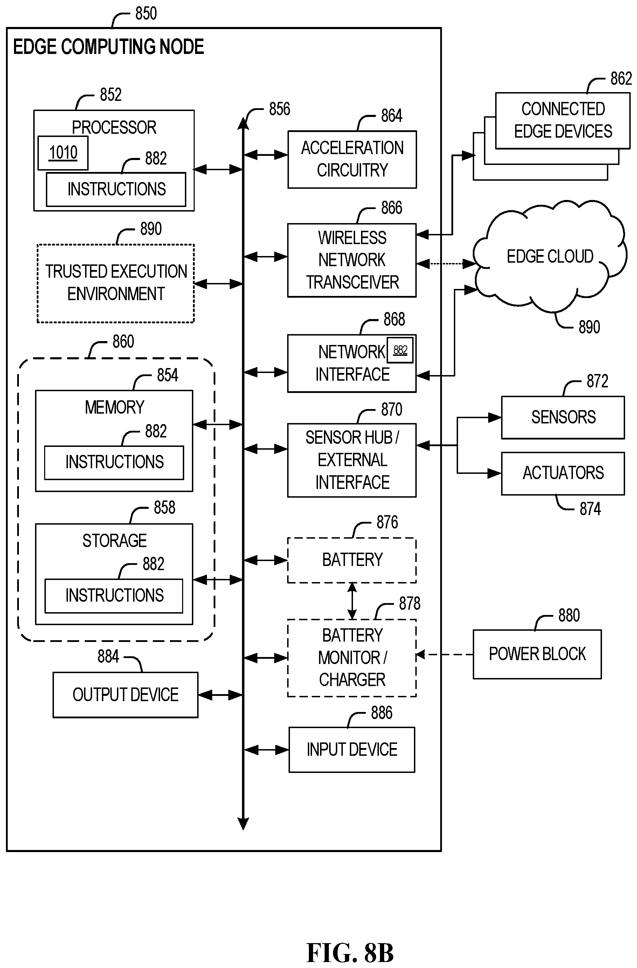

The network components of the edge cloud 210 may include servers, multi-tenant servers, appliance computing devices, and/or any other type of computing devices. For example, the edge cloud 210 may be an appliance computing device that is a self-contained electronic device including a housing, a chassis, a case, or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 8B. The edge cloud 210 may also include one or more server and/or one or more multi-tenant server. Such a server may include an operating system and a virtual computing environment. A virtual computing environment may include a hypervisor managing (spawning, deploying, destroying, etc.) one or more virtual machines, one or more containers, etc. Such virtual computing environments provide an execution environment in which one or more applications and/or other software, code, or scripts may execute while being isolated from one or more other applications, software, code, or scripts.

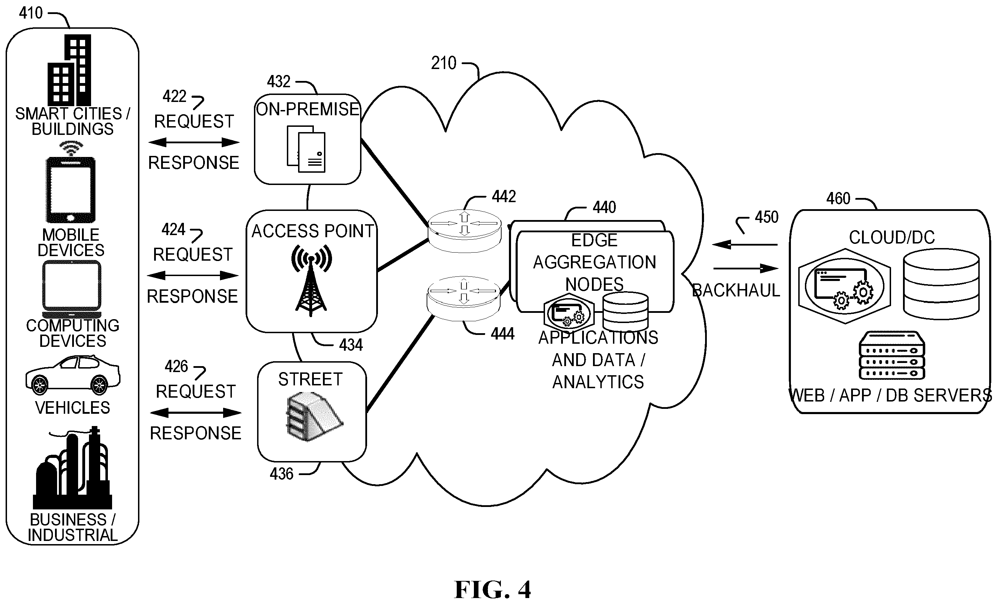

FIG. 4 illustrates a block diagram of an example environment 400 in which various client endpoints 410 (in the form of mobile devices, computers, autonomous vehicles, business computing equipment, industrial processing equipment) exchange requests and responses with the example edge cloud 210. For instance, computers, business computing equipment, and industrial processing equipment may obtain network access via a wired broadband network, by exchanging requests and responses 422 through an on-premise network system 432. Mobile computing devices may obtain network access via a wireless broadband network, by exchanging requests and responses 424 through a cellular network tower 434. Autonomous vehicles may obtain network access for requests and responses 426 via a wireless vehicular network through a street-located network system 436. However, regardless of the type of network access, the TSP may deploy aggregation points 442, 444 within the edge cloud 210 to aggregate traffic and requests. Thus, within the edge cloud 210, the TSP may deploy various compute and storage resources, such as at edge aggregation nodes 440, to provide requested content. The edge aggregation nodes 440 and other systems of the edge cloud 210 are connected to a cloud or data center 460, which uses a backhaul network 450 to fulfill complex, but more latency-tolerant requests using a cloud/data center for websites, applications, database servers, etc. Additional or consolidated instances of the edge aggregation nodes 440 and the aggregation points 442, 444, including those deployed on a single server framework, may also be present within the edge cloud 210 or other areas of the TSP infrastructure.

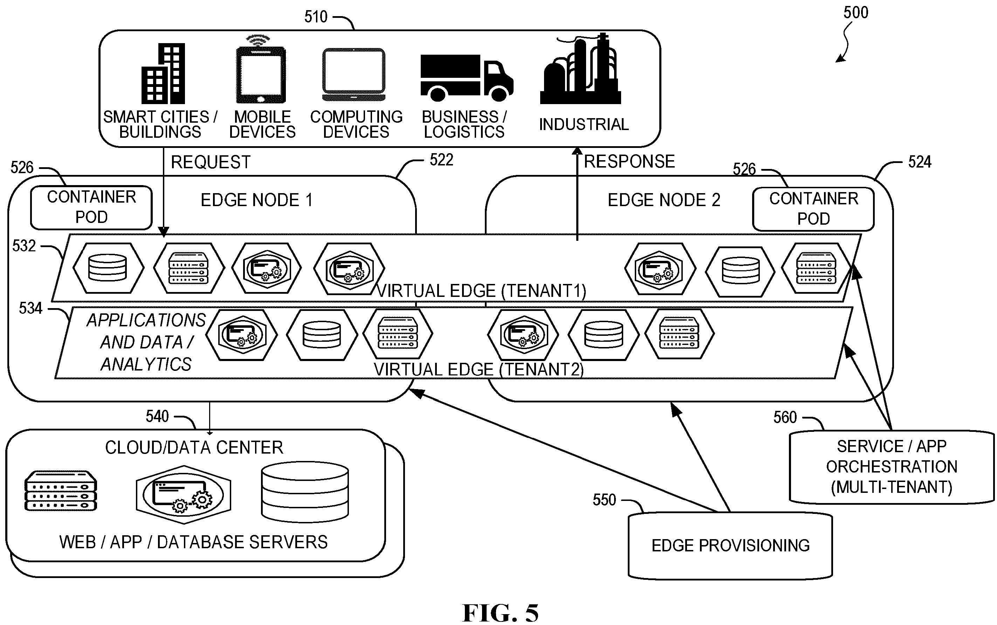

FIG. 5 illustrates deployment and orchestration for virtual edge configurations across an edge computing system operated among multiple edge nodes and multiple tenants. Specifically, FIG. 5 depicts coordination of a first edge node 522 and a second edge node 524 in an edge computing system 500, to fulfill requests and responses for various client endpoints 510 (e.g., smart cities / building systems, mobile devices, computing devices, business/logistics systems, industrial systems, etc.) which access various virtual edge instances. Here, the virtual edge instances provide edge compute capabilities and processing in an edge cloud, with access to a cloud/data center 540 for higher-latency requests for websites, applications, database servers, etc. However, the edge cloud enables coordination of processing among multiple edge nodes for multiple tenants or entities.

In the example of FIG. 5, these virtual edge instances include: a first virtual edge 532, offered to a first tenant (Tenant 1), which offers a first combination of edge storage, computing, and services; and a second virtual edge 534, offering a second combination of edge storage, computing, and services. The virtual edge instances 532, 534 are distributed among the edge nodes 522, 524, and may include scenarios in which a request and response are fulfilled from the same or different edge nodes. The configuration of the edge nodes 522, 524 to operate in a distributed yet coordinated fashion occurs based on edge provisioning functions 550. The functionality of the edge nodes 522, 524 to provide coordinated operation for applications and services, among multiple tenants, occurs based on orchestration functions 560.

It should be understood that some of the devices 510 interaction with the nodes 522 and 524 in the edge cloud 500 are multi-tenant devices where Tenant 1 may function within a tenant1 'slice' while a Tenant 2 may function within a tenant2 'slice' (and, in further examples, additional or sub-tenants may exist; and each tenant may even be specifically entitled and transactionally tied to a specific set of features all the way day to specific hardware features). A trusted multi-tenant device may further contain a tenant-specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 522, 524 may operate as security feature enforcement points for local resources allocated to multiple tenants per node. Additionally, tenant runtime and application execution (e.g., in instances 532, 534) may serve as an enforcement point for a security feature that creates a virtual edge abstraction of resources spanning potentially multiple physical hosting platforms. Finally, the orchestration functions 560 at an orchestration entity may operate as a security feature enforcement point for marshalling resources along tenant boundaries.

Edge computing nodes may partition resources (memory, CPU, GPU, interrupt controller, I/O controller, memory controller, bus controller, etc.) where respective partitionings may contain a RoT capability and where fan-out and layering according to a DICE model may further be applied to Edge Nodes. Cloud computing nodes consisting of containers, FaaS engines, Servlets, servers, or other computation abstraction may be partitioned according to a DICE layering and fan-out structure to support a RoT context for each. Accordingly, the respective devices 510, 522, and 540 spanning RoTs may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 5. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each of the edge nodes 522, 524 may implement the use of containers, such as with the use of a container "pod" 526, 528 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 532, 534 are partitioned according to the needs of each container.

With the use of container pods, a pod controller oversees the partitioning and allocation of containers and resources. The pod controller receives instructions from an orchestrator (e.g., the orchestrator 560) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 560 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

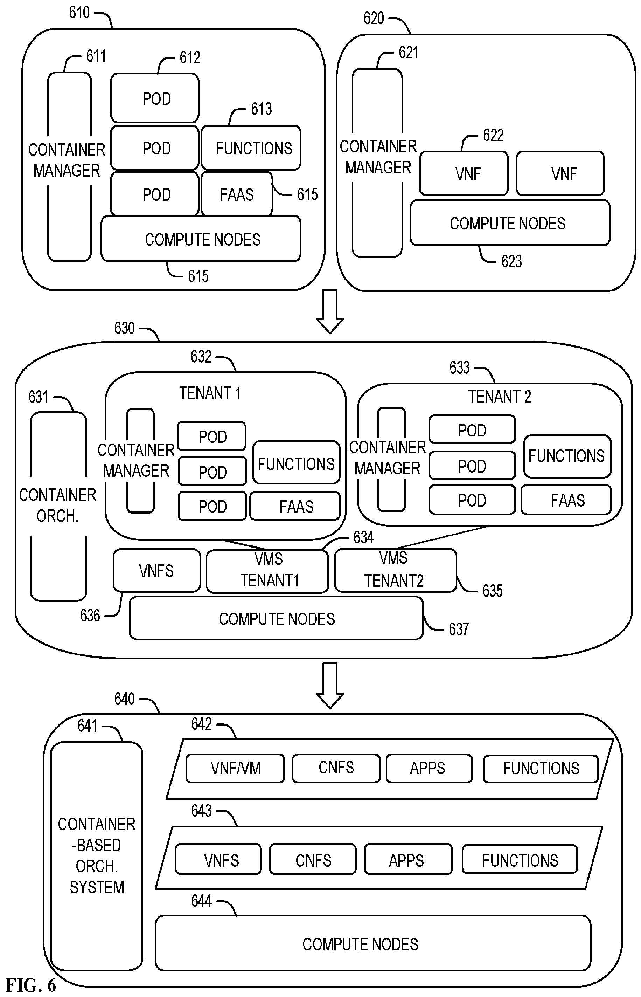

FIG. 6 illustrates additional compute arrangements deploying containers in an edge computing system. As a simplified example, system arrangements 610, 620 depict settings in which a pod controller (e.g., container managers 611,621, and a container orchestrator 631) is adapted to launch containerized pods, functions, and functions-as-a-service instances through execution via compute nodes (615 in arrangement 610), or to separately execute containerized virtualized network functions through execution via compute nodes (623 in arrangement 620). This arrangement is adapted for use of multiple tenants in system arrangement 630 (using compute nodes 637), where containerized pods (e.g., pods 612), functions (e.g., functions 613, VNFs 622, 636), and functions-as-a-service instances (e.g., the FaaS instance 615) are launched within virtual machines (e.g., VMs 634, 635 for tenants 632, 633) specific to respective tenants (aside the execution of virtualized network functions). This arrangement is further adapted for use in system arrangement 640, which provides containers 642, 643, or execution of the various functions, applications, and functions on compute nodes 644, as coordinated by a container-based orchestration system 641.

The system arrangements of depicted in FIG. 6 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 6, the pod controller/container manager, container orchestrator, and individual nodes may provide a security enforcement point. However, tenant isolation may be orchestrated where the resources allocated to a first tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves, and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

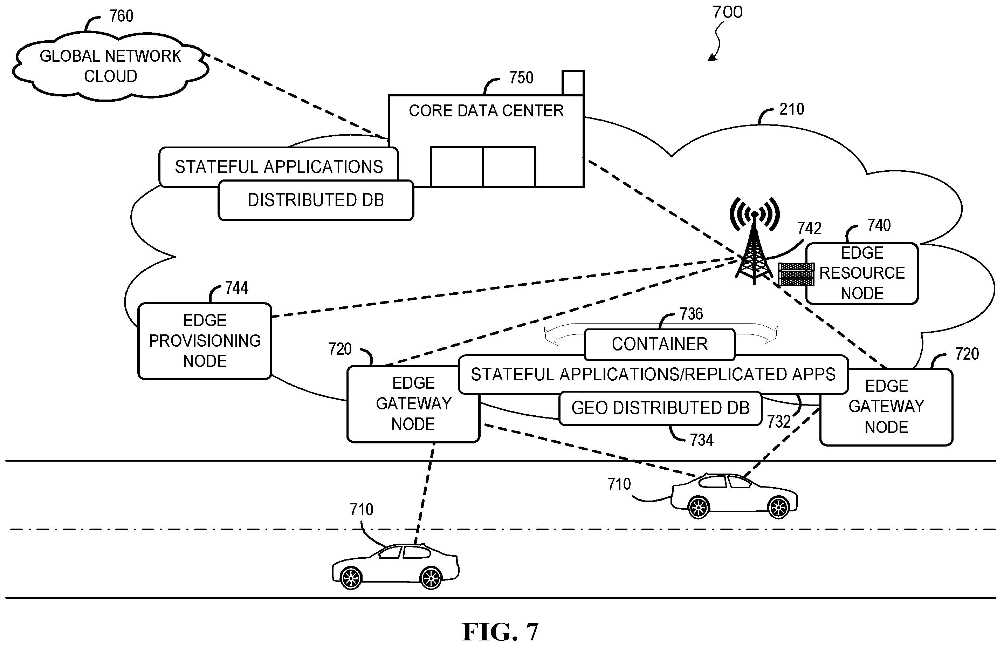

It should be appreciated that the edge computing systems and arrangements discussed herein may be applicable in various solutions, services, and/or use cases involving mobility. As an example, FIG. 7 shows an example simplified vehicle compute and communication use case involving mobile access to applications in an example edge computing system 700 that implements an edge cloud such as the edge cloud 210 of FIG. 2. In this use case, respective client compute nodes 710 may be embodied as in-vehicle compute systems (e.g., in-vehicle navigation and/or infotainment systems) located in corresponding vehicles which communicate with example edge gateway nodes 720 during traversal of a roadway. For instance, the edge gateway nodes 720 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 710 and a particular one of the edge gateway nodes 720 may propagate to another of the edge gateway nodes 720 so as to maintain a consistent connection and context for the example client compute node 710. Likewise, mobile edge nodes may aggregate at the high priority services or according to the throughput or latency resolution requirements for the underlying service(s) (e.g., in the case of drones). The respective edge gateway devices 720 include an amount of processing and storage capabilities and, as such, some processing and/or storage of data for the client compute nodes 710 may be performed on one or more of the edge gateway nodes 720.

The edge gateway nodes 720 may communicate with one or more edge resource nodes 740, which are illustratively embodied as compute servers, appliances or components located at or in a communication base station 742 (e.g., a based station of a cellular network). As discussed above, the respective edge resource node(s) 740 include an amount of processing and storage capabilities and, as such, some processing and/or storage of data for the client compute nodes 710 may be performed on the edge resource node(s) 740. For example, the processing of data that is less urgent or important may be performed by the edge resource node(s) 740, while the processing of data that is of a higher urgency or importance may be performed by the edge gateway devices 720 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 740 also communicate with the core data center 750, which may include compute servers, appliances, and/or other components located in a central location (e.g., a central office of a cellular communication network). The example core data center 750 may provide a gateway to the global network cloud 760 (e.g., the Internet) for the edge cloud 210 operations formed by the edge resource node(s) 740 and the edge gateway devices 720. Additionally, in some examples, the core data center 750 may include an amount of processing and storage capabilities and, as such, some processing and/or storage of data for the client compute devices may be performed on the core data center 750 (e.g., processing of low urgency or importance, or high complexity).

The edge gateway nodes 720 or the edge resource node(s) 740 may offer the use of stateful applications 732 and a geographically distributed database 734. Although the applications 732 and database 734 are illustrated as being horizontally distributed at a layer of the edge cloud, it will be understood that resources, services, or other components of the application may be vertically distributed throughout the edge cloud (including, part of the application executed at the client compute node 710, other parts at the edge gateway nodes 720 or the edge resource node(s) 740, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 736 (or pod of containers) may be flexibly migrated from one of the edge nodes 720 to other edge nodes (e.g., another one of the edge nodes 720, one of the resource node(s) 740, etc.) such that the container with an application and workload does not need to be reconstituted, re-compiled, re-interpreted in order for migration to work. However, in such settings, there may be some remedial or "swizzling" translation operations applied. For example, the physical hardware at the edge resource node(s) 740 may differ from the hardware at the edge gateway nodes 720 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format or may involve mapping interfaces and operations. A pod controller may be used to drive the interface mapping as part of the container lifecycle, which includes migration to/from different hardware environments.

The scenarios encompassed by FIG. 7 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 720, some others at the edge resource node(s) 740, and others in the core data center 750 or global network cloud 760.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 700 can include or be in communication with an edge provisioning node 744. The edge provisioning node 744 can distribute software such as the example computer readable instructions 882 of FIG. 8B, to various receiving parties for implementing any of the methods described herein. The example edge provisioning node 744 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 744 may be located in a cloud, in a local area network, in an edge network, in a wide area network, on the Internet, and/or any other location communicatively coupled with the receiving party(-ies). The receiving parties may be customers, clients, associates, users, etc. of the entity owning and/or operating the edge provisioning node 744. For example, the entity that owns and/or operates the edge provisioning node 744 may be a developer, a seller, and/or a licensor (or a customer and/or consumer thereof) of software instructions such as the example computer readable instructions 882 of FIG. 8B. The receiving parties may be consumers, service providers, users, retailers, OEMs, etc., who purchase and/or license the software instructions for use and/or re-sale and/or sub-licensing.

In an example, edge provisioning node 744 includes one or more servers and one or more storage devices. The storage devices host computer readable instructions such as the example computer readable instructions 882 of FIG. 8B, as described below. Similarly to edge gateway devices 720 described above, the one or more servers of the edge provisioning node 744 are in communication with a base station 742 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third party payment entity. The servers enable purchasers and/or licensors to download the computer readable instructions 882 from the edge provisioning node 744. For example, the software instructions, which may correspond to the example computer readable instructions 882 of FIG. 8B, may be downloaded to the example processor platform/s, which is to execute the computer readable instructions 882 to implement the methods described herein.

In some examples, the processor platform(s) that execute the computer readable instructions 882 can be physically located in different geographic locations, legal jurisdictions, etc. In some examples, one or more servers of the edge provisioning node 744 periodically offer, transmit, and/or force updates to the software instructions (e.g., the example computer readable instructions 882 of FIG. 8B) to ensure improvements, patches, updates, etc. are distributed and applied to the software instructions implemented at the end user devices. In some examples, different components of the computer readable instructions 882 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

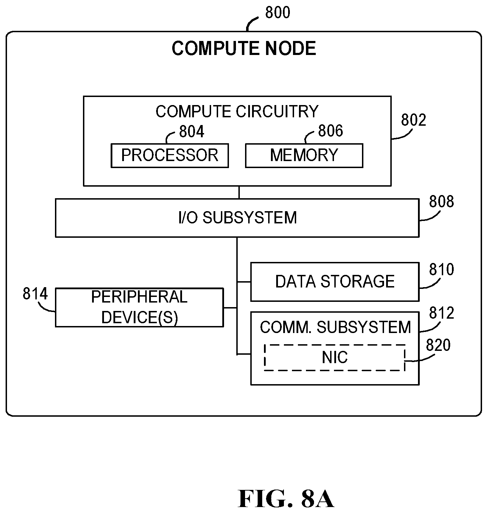

In further examples, any of the compute nodes or devices discussed with reference to the present edge computing systems and environment may be fulfilled based on the components depicted in FIGS. 8A and 8B. Respective edge compute nodes may be embodied as a type of device, appliance, computer, or other "thing" capable of communicating with other edge, networking, or endpoint components. For example, an edge compute device may be embodied as a personal computer, a server, a smartphone, a mobile compute device, a smart appliance, an in-vehicle compute system (e.g., a navigation system), a self-contained device having an outer case, shell, etc., or other device or system capable of performing the described functions.

FIG. 8A is block diagram of an example implementation of an example edge compute node 800 that includes a compute engine (also referred to herein as "compute circuitry") 802, an input/output (I/O) subsystem 808, data storage 810, a communication circuitry subsystem 812, and, optionally, one or more peripheral devices 814. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component. The example edge compute node 800 of FIG. 8A may be deployed in one of the edge computing systems illustrated in FIGS. 1-5 and/or 7 to implement any edge compute node of FIGS. 1-5 and/or 7.

The compute node 800 may be embodied as any type of engine, device, or collection of devices capable of performing various compute functions. In some examples, the compute node 800 may be embodied as a single device such as an integrated circuit, an embedded system, a field-programmable gate array (FPGA), a system-on-a-chip (SOC), or other integrated system or device. In the illustrative example, the compute node 800 includes or is embodied as a processor 804 and a memory 806. The processor 804 may be embodied as any type of processor capable of performing the functions described herein (e.g., executing an application). For example, the processor 804 may be embodied as a multi-core processor(s), a microcontroller, a processing unit, a specialized or special purpose processing unit, or other processor or processing/controlling circuit.

In some examples, the processor 804 may be embodied as, include, or be coupled to an FPGA, an application specific integrated circuit (ASIC), reconfigurable hardware or hardware circuitry, or other specialized hardware to facilitate performance of the functions described herein. Also, in some examples, the processor 804 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 804 may work in coordination with each other to execute many types of operations and instructions within and on behalf of the compute node 800.

The memory 806 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Nonlimiting examples of volatile memory may include various types of random access memory (RAM), such as DRAM or static random access memory (SRAM). One particular type of DRAM that may be used in a memory module is synchronous dynamic random access memory (SDRAM).

In one example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may include a transistor-less stackable cross point architecture in which memory cells sit at the intersection of word lines and bit lines and are individually addressable and in which bit storage is based on a change in bulk resistance. In some examples, all or a portion of the main memory 806 may be integrated into the processor 1804. The main memory 806 may store various software and data used during operation such as one or more applications, data operated on by the application(s), libraries, and drivers.

The compute circuitry 802 is communicatively coupled to other components of the compute node 800 via the I/O subsystem 808, which may be embodied as circuitry and/or components to facilitate input/output operations with the compute circuitry 802 (e.g., with the processor 804 and/or the main memory 806) and other components of the compute circuitry 802. For example, the I/O subsystem 808 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 808 may form a portion of a system-on-a-chip (SoC) and be incorporated, along with one or more of the processor 804, the main memory 806, and other components of the compute circuitry 802, into the compute circuitry 802.

The one or more illustrative data storage devices 810 may be embodied as any type of devices configured for short-term or long-term storage of data such as, for example, memory devices and circuits, memory cards, hard disk drives, solid-state drives, or other data storage devices. Individual data storage devices 810 may include a system partition that stores data and firmware code for the data storage device 810. Individual data storage devices 810 may also include one or more operating system partitions that store data files and executables for operating systems depending on, for example, the type of compute node 800.

The communication circuitry 812 may be embodied as any communication circuit, device, or collection thereof, capable of enabling communications over a network between the compute circuitry 802 and another compute device (e.g., an edge gateway of an implementing edge computing system). The communication circuitry 812 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 812 includes a network interface controller (NIC) 820, which may also be referred to as a host fabric interface (HFI). Fabric connected to the HFI can include a variety of fabric such as for satellite backhaul connectivity, etc. The NIC 820 may be embodied as one or more add-in-boards, daughter cards, network interface cards, controller chips, chipsets, or other devices that may be used by the compute node 800 to connect with another compute device (e.g., an edge gateway node). In some examples, the NIC 820 may be embodied as part of a system-on-a-chip (SoC) that includes one or more processors or included on a multichip package that also contains one or more processors. In some examples, the NIC 820 may include a local processor (not shown) and/or a local memory (not shown) that are both local to the NIC 820. In such examples, the local processor of the NIC 820 may be capable of performing one or more of the functions of the compute circuitry 802 described herein. Additionally, or alternatively, in such examples, the local memory of the NIC 820 may be integrated into one or more components of the client compute node at the board level, socket level, chip level, and/or other levels.

Additionally, in some examples, a respective compute node 800 may include one or more peripheral devices 814. Such peripheral devices 814 may include any type of peripheral device found in a compute device or server such as audio input devices, a display, other input/output devices, interface devices, and/or other peripheral devices, depending on the particular type of the compute node 800. In further examples, the compute node 800 may be embodied by a respective edge compute node (whether a client, gateway, or aggregation node) in an edge computing system or like forms of appliances, computers, subsystems, circuitry, or other components.

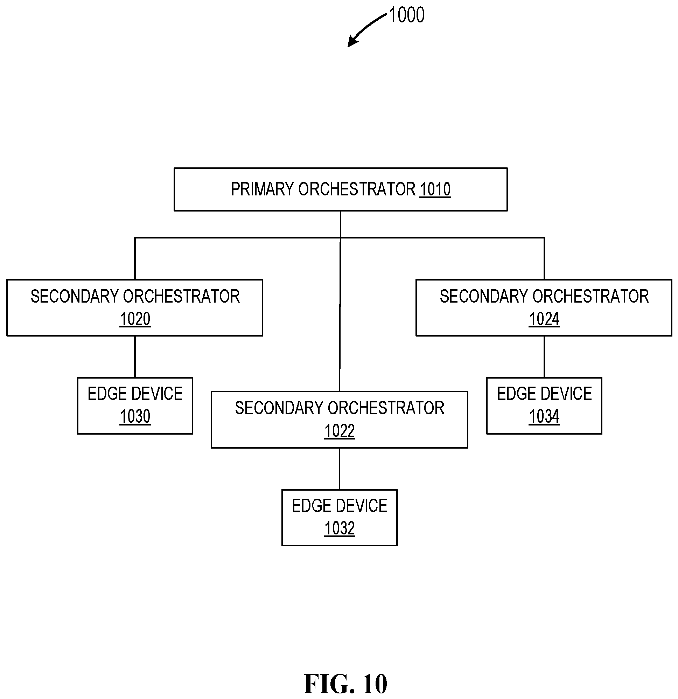

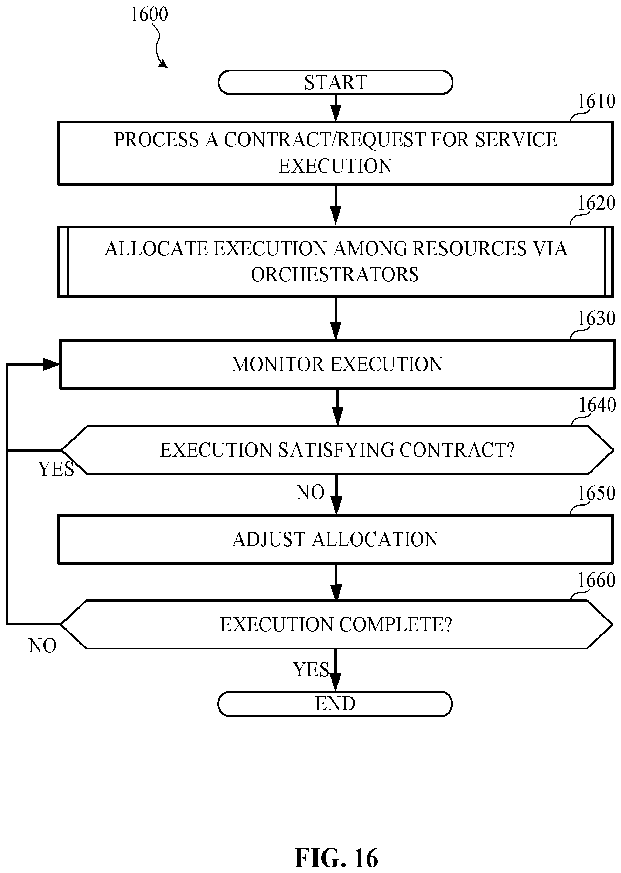

In a more detailed example, FIG. 8B illustrates a block diagram of an example edge computing node 850 structured to execute the instructions of FIGS. 16-17 to implement the techniques (e.g., operations, processes, methods, and methodologies) described herein such as the orchestrators described below with respect to FIGS. 10-14. This edge computing node 850 provides a closer view of the respective components of node 800 when implemented as or as part of a computing device (e.g., as a mobile device, a base station, server, gateway, etc.). The edge computing node 850 may include any combinations of the hardware or logical components referenced herein, and it may include or couple with any device usable with an edge communication network or a combination of such networks. The components may be implemented as ICs, portions thereof, discrete electronic devices, or other modules, instruction sets, programmable logic or algorithms, hardware, hardware accelerators, software, firmware, or a combination thereof adapted in the edge computing node 850, or as components otherwise incorporated within a chassis of a larger system. For example, the edge computing node 850 can be a server, a personal computer, a workstation, a self-learning machine (e.g., a neural network), a mobile device (e.g., a cell phone, a smart phone, a tablet such as an iPadTM), a personal digital assistant (PDA), an Internet appliance, a DVD player, a CD player, a digital video recorder, a Blu-ray player, a gaming console, a personal video recorder, a set top box, a headset or other wearable device, an Internet of Things (IoT) device, or any other type of computing device.

The edge computing device 850 may include processing circuitry in the form of a processor 852, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 852 may be a part of a system on a chip (SoC) in which the processor 852 and other components are formed into a single integrated circuit, or a single package, such as the Edison^{™} or Galileo^{™} SoC boards from Intel Corporation, Santa Clara, California. As an example, the processor 852 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 852 and accompanying circuitry may be provided in a single socket form factor, multiple socket form factor, or a variety of other formats, including in limited hardware configurations or configurations that include fewer than all elements shown in FIG. 8B. In this example, the processor 852 implements an example orchestrator 1010 described below with respect to FIG. 10.

The processor 852 may communicate with a system memory 854 over an interconnect 856 (e.g., a bus). Any number of memory devices may be used to provide for a given amount of system memory. As examples, the memory may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 858 may also couple to the processor 852 via the interconnect 856. In an example, the storage 858 may be implemented via a solid-state disk drive (SSDD). Other devices that may be used for the storage 858 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 858 may be on-die persistent memory or registers associated with the processor 852. However, in some examples, the storage 858 may be implemented using a micro hard disk drive (HDD). Further, any number of new technologies may be used for the storage 858 in addition to, or instead of, the technologies described, such resistance change memories, phase change memories, holographic memories, or chemical memories, among others.

The components may communicate over the interconnect 856. The interconnect 856 may include any number of technologies, including industry standard architecture (ISA), extended ISA (EISA), peripheral component interconnect (PCI), peripheral component interconnect extended (PCIx), PCI express (PCIe), or any number of other technologies. The interconnect 856 may be a proprietary bus, for example, used in an SoC based system. Other bus systems may be included, such as an I2C interface, an SPI interface, point to point interfaces, and a power bus, among others.

The interconnect 856 may couple the processor 852 to a transceiver 866, for communications with the connected edge devices 862. The transceiver 866 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 862. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 866 (or multiple transceivers) may communicate using multiple standards or radios for communications at a different range. For example, the edge computing node 850 may communicate with close devices, e.g., within about 10 meters, using a local transceiver based on BLE, or another low power radio, to save power. More distant connected edge devices 862, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 866 (e.g., a radio transceiver) may be included to communicate with devices or services in the edge cloud 890 via local or wide area network protocols. The wireless network transceiver 866 may be an LPWA transceiver that follows the IEEE 802.15.4, or IEEE 802.15.4g standards, among others. The edge computing node 850 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 866, as described herein. For example, the transceiver 866 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 866 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 868 may be included to provide a wired communication to nodes of the edge cloud 890 or to other devices, such as the connected edge devices 862 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 868 may be included to enable connecting to a second network, for example, a first NIC 868 providing communications to the cloud over Ethernet, and a second NIC 868 providing communications to other devices over another type of network. The NIC 868 may include instructions 882 in the form of software, firmware, or hardware commands to implement the techniques described herein.

Given the variety of types of applicable communications from the device to another component or network, applicable communications circuitry used by the device may include or be embodied by any one or more of components 864, 866, 868, or 870. Accordingly, in various examples, applicable means for communicating (e.g., receiving, transmitting, etc.) may be embodied by such communications circuitry.

The edge computing node 850 may include or be coupled to acceleration circuitry 864, which may be embodied by one or more AI accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 856 may couple the processor 852 to a sensor hub or external interface 870 that is used to connect additional devices or subsystems. The devices may include sensors 872, such as accelerometers, level sensors, flow sensors, optical light sensors, camera sensors, temperature sensors, global navigation system (e.g., GPS) sensors, pressure sensors, barometric pressure sensors, and the like. The hub or interface 870 further may be used to connect the edge computing node 850 to actuators 874, such as power switches, valve actuators, an audible sound generator, a visual warning device, and the like.

In some optional examples, various input/output (I/O) devices may be present within or connected to, the edge computing node 850. For example, a display or other output device 884 may be included to show information, such as sensor readings or actuator position. An input device 886, such as a touch screen or keypad may be included to accept input. An output device 884 may include any number of forms of audio or visual display, including simple visual outputs such as binary status indicators (e.g., LEDs) and multi-character visual outputs, or more complex outputs such as display screens (e.g., LCD screens), with the output of characters, graphics, multimedia objects, and the like being generated or produced from the operation of the edge computing node 850. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 876 may power the edge computing node 850, although, in examples in which the edge computing node 850 is mounted in a fixed location, it may have a power supply coupled to an electrical grid, or the battery may be used as a backup or for temporary capabilities. The battery 876 may be a lithium ion battery, or a metal-air battery, such as a zinc-air battery, an aluminum-air battery, a lithium-air battery, and the like.

A battery monitor/charger 878 may be included in the edge computing node 850 to track the state of charge (SoCh) of the battery 876, if included. The battery monitor/charger 878 may be used to monitor other parameters of the battery 876 to provide failure predictions, such as the state of health (SoH) and the state of function (SoF) of the battery 876. The battery monitor/charger 878 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 878 may communicate the information on the battery 876 to the processor 852 over the interconnect 856. The battery monitor/charger 878 may also include an analog-to-digital (ADC) converter that enables the processor 852 to directly monitor the voltage of the battery 876 or the current flow from the battery 876. The battery parameters may be used to determine actions that the edge computing node 850 may perform, such as transmission frequency, mesh network operation, sensing frequency, and the like.

A power block 880, or other power supply coupled to a grid, may be coupled with the battery monitor/charger 878 to charge the battery 876. In some examples, the power block 880 may be replaced with a wireless power receiver to obtain the power wirelessly, for example, through a loop antenna in the edge computing node 850. A wireless battery charging circuit, such as an LTC4020 chip from Linear Technologies of Milpitas, California, among others, may be included in the battery monitor/charger 878. The specific charging circuits may be selected based on the size of the battery 876, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 858 may include instructions 882 in the form of software, firmware, or hardware commands to implement the techniques described herein. Although such instructions 882 are shown as code blocks included in the memory 854 and the storage 858, it may be understood that any of the code blocks may be replaced with hardwired circuits, for example, built into an application specific integrated circuit (ASIC).

In an example, the instructions 882 provided via the memory 854, the storage 858, or the processor 852 may be embodied as a non-transitory, machine-readable medium 860 including code to direct the processor 852 to perform electronic operations in the edge computing node 850. The processor 852 may access the non-transitory, machine-readable medium 860 over the interconnect 856. For instance, the non-transitory, machine-readable medium 860 may be embodied by devices described for the storage 858 or may include specific storage units such as optical disks, flash drives, or any number of other hardware devices. The non-transitory, machine-readable medium 860 may include instructions to direct the processor 852 to perform a specific sequence or flow of actions, for example, as described with respect to the flowchart(s) and block diagram(s) of operations and functionality depicted above and below. As used herein, the terms "machine-readable medium" and "computer-readable medium" are interchangeable.

Also in a specific example, the instructions 882 on the processor 852 (separately, or in combination with the instructions 882 of the machine readable medium 860) may configure execution or operation of a trusted execution environment (TEE) 890. In an example, the TEE 890 operates as a protected area accessible to the processor 852 for secure execution of instructions and secure access to data. Various implementations of the TEE 890, and an accompanying secure area in the processor 852 or the memory 854 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 850 through the TEE 890 and the processor 852.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

The machine executable instructions 1600 of FIGS. 16-17 may be stored in the mass storage device 828, in the volatile memory 814, in the non-volatile memory 816, and/or on a removable non-transitory computer readable storage medium such as a CD or DVD.

As such, edge computing leverages edge devices or nodes, which are local to part of a network, to enable processing of data away from centralized cloud or solely based on cloud storage. Edge computing provides decentralized storage, and local nodes or devices can act as servers to process data, provide services, etc., in an edge computing infrastructure. Alternatively or additionally, fog computing combines centralized data storage with cloud-base storage. Processing in a fog computing network occurs at local networks with decentralized servers such that data can be accessed offline because at least some portion of the data is stored locally, as opposed to cloud computing, in which computing and storage are executed using remote servers, for example. With fog computing, an unstable network connection and/or other network downtime may not interfere with operations since a portion of data can be stored locally and processed.

Using one or more of the example environments described above, services can be orchestrated within and among multiple edge and/or cloud resources by one or more orchestrators. Services such as augmented reality, virtual reality, content delivery networks (CDNs), etc., can be executed by one or more edge, cloud, or fog devices under the direction of one or more orchestrators.

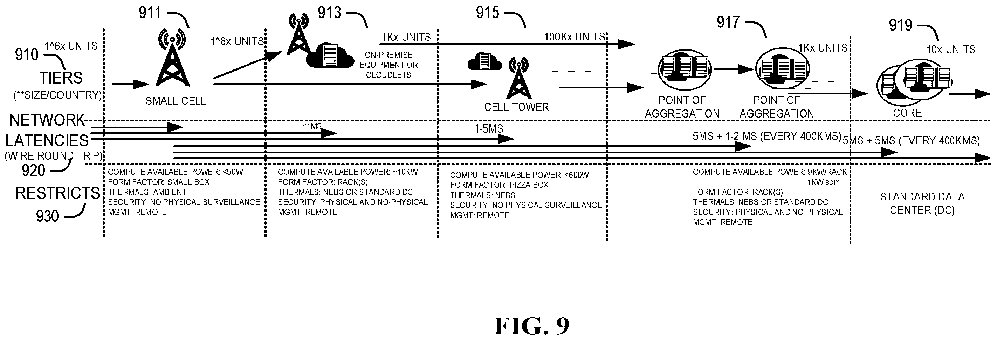

FIG. 9 shows an example edge architecture 900 including a plurality of tiers 910 with associated network latency 920, and restrictions 930. As shown in the example of FIG. 9, different services are executed in different locations in the hierarchy of the example edge architecture 900 (e.g., similar to or distinct from the example edge environment 110, edge cloud 210, etc., described above).

For example, in a small cell tier 911, with a round-trip network latency 920 of less than one millisecond (ms), available compute power is less than 500 Watts (W); the form factor is a small box; thermals are ambient; there is no physical surveillance for security; and management is remote. Use cases for the example small cell tier 911 include smart cities, vehicle-to-vehicle (V2V), retail, video analytics, etc. Key performance indicators (KPIs) associated with these example use cases include data privacy, backhaul traffic savings, reliability, latency, etc.

As another example, in an on-premise equipment and/or cloudlet tier 913, with a round-trip network latency 920 of less than one ms, available compute power is approximately 10 Kilowatts (KW); the form factor is one or more racks of computing and/or communication equipment; thermals follow Network Equipment-Building System (NEBS) or standard data center (DC) thermal guidelines; there may or may not be physical surveillance for security; and management is remote. Use cases for the example on-premise equipment/cloudlet tier 913 include AR/VR, retail, real-time (RT) streaming, healthcare, etc. KPIs associated with these example use cases include latency, backhaul traffic savings, network scalability, data privacy, reliability, access to services, etc.

In an example cell tower tier 915 with a round-trip network latency 920 of 1-5 ms, available compute power is less than 500 W; the form factor is a pizza box; thermals are in accordance with NEBS environmental guidelines; there is no physical surveillance for security; and management is remote. Use cases for the example cell tower tier 915 include smart cities, V2V, video analytics, drone/Internet of Things (IoT), rural, etc. KPIs associated with these example use cases include data privacy, backhaul traffic savings, reliability, throughput, latency, access to services, etc.

In an example tier 917 with multiple points of aggregation with a round-trip network latency 920 of 5 ms plus 1-2 ms (every 100kms), available compute power is 9KW/rack and 1KW per square meter (sqm) of the multi-point array917; the form factor is a plurality of racks of computing and/or communication equipment; thermals are according to NEBS and/or standard DC conditions; there may or may not be physical surveillance for security; and management is remote. Use cases for the example multi-point tier 917 include smart cities, video analytics, drone/IoT, healthcare, CDN and storage, FaaS, AR/VR/mixed reality (MR), etc. KPIs associated with these example use cases include data privacy, reliability, backhaul traffic savings, throughput, latency, etc.

In an example core tier 919 with a round-trip network latency 920 of 5 ms plus 5 ms (every 400kms), available compute power, form CDN, storage gateway (GW), etc. KPIs associated with these example use cases include backhaul traffic savings, throughput, etc.

Past the example core tier 919 lies the cloud, in which round-trip network latency can be more than 60 ms, for example.

In certain examples, each edge location, such as each edge tier 910 in the example of FIG. 9, includes a local orchestrator (not shown, also referred to as a secondary orchestrator such as the example orchestrator 142, 150, the example orchestrator 560, the example container orchestrator 631, etc.) that manages the edge tier 910 from devices to data center edges, etc. An edge orchestrator (not shown, also referred to as a primary orchestrator) coordinates among the local orchestrators to manage services across a plurality of edge tiers 911-919. As such, the edge orchestrator provides edge-to-edge (e2e) orchestration among the local orchestrators.

For example, the edge orchestrator can instantiate and allocate resources in a selected edge location to execute a service with a particular SLA and particular cost. The edge orchestrator can monitor SLAs associated with an application during execution of the application and compare a monitored SLA with a provided SLA, for example. The edge orchestrator can migrate a service from one edge location to another edge location based on one or more criterion and/or factors such as additional resources to be used to satisfy the SLA, accommodation of user movement to continue access to a service (e.g., the user is in a car moving from one location to another location, etc.), etc.

However, different edge tiers or locations 910 can be defined, owned, and/or controlled by different edge entities, creating differences in management, authorization, monitoring, etc. The edge orchestrator can cross edge boundaries and overcome, address, and/or otherwise react to these edge-specific issues that constrain the local orchestrator.

FIG. 10 is a block diagram of an example orchestration system 1000 including a primary orchestrator 1010 (also referred to as the edge orchestrator 1010), a plurality of secondary orchestrators 1020-1024, and a plurality of edge devices or other edge entities 1030-1034. The secondary orchestrators 1020-1024 are delegated orchestration entities for each edge entity 1030-1034 and execute under the primary orchestrator 1010, which serves as a main orchestration authority. As such, the secondary orchestrators 1020-1024 can form a mesh, and the primary orchestrator 1010 coordinates or orchestrates the mesh of orchestrators 1020-1024. The orchestrators 1010, 1020-1024 can be implemented as one or more containers, virtual machines, another hardware and/or software construct, a processor, etc., such as the example orchestrator 142, 150, the example orchestrator 560, the example container orchestrator 631, etc.

Delegated orchestration enables improved management of services among edge devices 1030-1034. Using delegated orchestration between primary 1010 and secondary orchestrators 1020-1024, scheduling and management of a service (and/or associated task, job, etc.) is controlled throughout the lifecycle of the service, regardless of whether all or part of the service is relayed, partitioned, or migrated among edge entities 1030-1034.

For example, the primary orchestrator 1010 can delegate a service from a first of the plurality of edge devices 1030-1034 to a second of the plurality of the edge devices 1030-1034, and an associated secondary orchestrator 1020-1024 assumes responsibility for orchestrating the service on the edge device 1030-1034. As such, rather than a peer-to-peer model attempting to negotiate separate edge deployments belonging to different entities and orchestrated separately, certain examples provide delegated orchestration to coordinate the plurality of secondary orchestrators 1020-1024 under the umbrella of the primary orchestrator 1010. In certain examples, delegated orchestration authority is provided based on attestation and validation of the trustworthiness of the delegated authority.

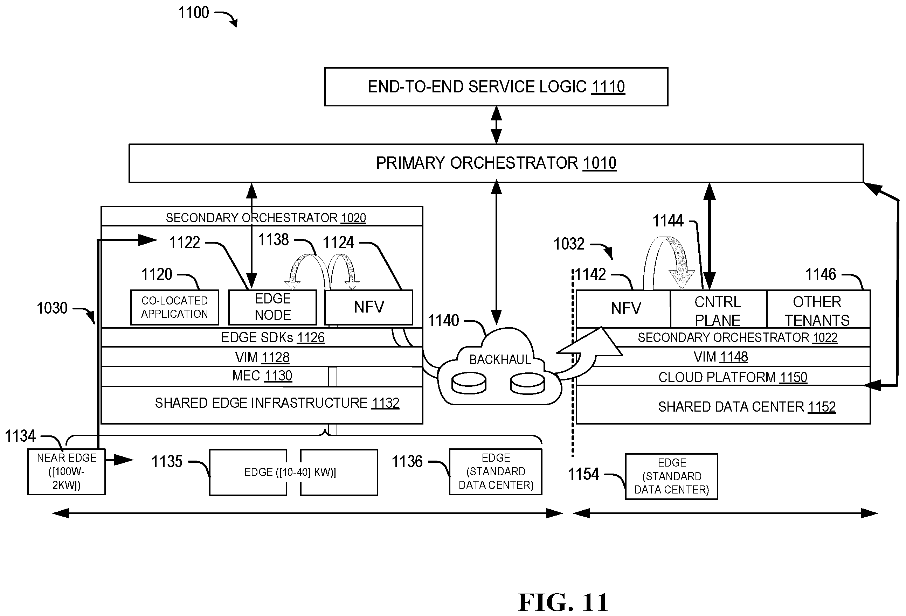

FIG. 11 illustrates an example network environment or infrastructure 1100 including the primary orchestrator 1010 and secondary orchestrators 1020-1022. As shown in the example of FIG. 11, the primary orchestrator 1010 is in communication with end-to-end service logic 1110. The end-to-end service logic 1110 provides differentiated subscriber SLO and continuous service to one or more subscribers or tenants of the network environment or infrastructure 1100. In certain examples, the end-to-end service logic 1110 provides services, hardware, and network telemetry to one or more subscribers. The edge orchestrator 1010 can re-configure the service, hardware, and/or network telemetry, for example.

As shown in the example of FIG. 11, the primary orchestrator 1010 can communicate with hardware and/or software resources of the edge entity 1030, 1032 via the secondary orchestrators 1020, 1022. The primary orchestrator 1010 allows consolidation of multiple services for multiple tenants to provide dynamic, adaptive SLA/SLO assurance with improved security. The combination of the primary orchestrator 1010 and secondary orchestrators 1020-1022 enables self-management and orchestration across hardware and software resources.

As shown in the example of FIG. 11, the secondary orchestrator 1020 provides service telemetry for configuration and control of software and/or hardware resources such as a co-located application 1120, an edge node 1122, network function virtualization (NFV) 1124, etc. The example application 1120, edge node 1122 (e.g., the example edge node 148, 156, 522, 524, 720, 740, 800, 850), and/or NFV 1124 can be used to interact with one or more edge software development kits (SDKs) 1126, such as a data plane development kit, deep learning and/or other artificial intelligence network model toolkit, etc.

In the example infrastructure 1100, the edge SDKs 1126 execute on top of a virtualization infrastructure manager (VIM) 1128, which manages the NFV 1124 and/or other compute, storage, and/or network resources of the edge entity 1030. The example VIM 1128 manages an inventory of allocation of virtual resources to physical resources. Management of the allocation allows for the orchestration of the allocation, upgrade, release, and reclamation of NFV 1124 resources and improvement/optimization of their usage by the orchestrator 1020, for example. A multi-access edge computing (MEC) platform 1130 enables cloud computing and services at a network edge and allows the VIM 1128 to interact with a shared edge infrastructure 1132. The shared edge infrastructure 1132 includes one or more servers, radios, etc., that can be used to communicate with near edge 1134 and/or edge 1135-1136 resources, such as cellular towers, data centers, other communication resources, etc.

Alternatively or additionally, the edge node 1122 and/or the NFV 1124 can utilize a local break out (LBO) switch 1138 to communicate directly with the edge resources 1135-1136, for example. The edge entity 1030 can be connected to another edge entity 1032 via a backhaul network 1140. The primary orchestrator 1010 can communicate with the backhaul network 1140 to provide network telemetry (e.g., aggregate, per slice, etc.) to adjust network configuration, for example. Additionally, the primary orchestrator 1010 can exchange hardware telemetry information with the shared edge infrastructure 1132 and reconfigure hardware in the shared edge infrastructure 1132, for example.

The second edge device or entity 1032 can include similar and/or different elements to the example edge entity 1030. As shown in the example of FIG. 11, The edge device 1032 includes an NFV 1142, a control plane 1144, and one or more other tenants 1146 interacting with the example orchestrator 1022. The orchestrator 1022 leverages a VIM 1148 to interact with a cloud platform 1150 and a shared data center 1152 communicating with an edge data center 1154.

In the example system or infrastructure 1100 shown in FIG. 11, orchestration can be coordinated across a plurality of edge devices/entities 1030-1032 using the primary orchestrator 1010 and within a particular edge domain 1030-1032 using the secondary orchestrator 1020-1022. In such a system 1100, orchestration responsibility and/or authority is delegated from the secondary orchestrator 1020 to the secondary orchestrator 1022 to help ensure that service(s) can execute across edge boundaries within the example infrastructure 1100.

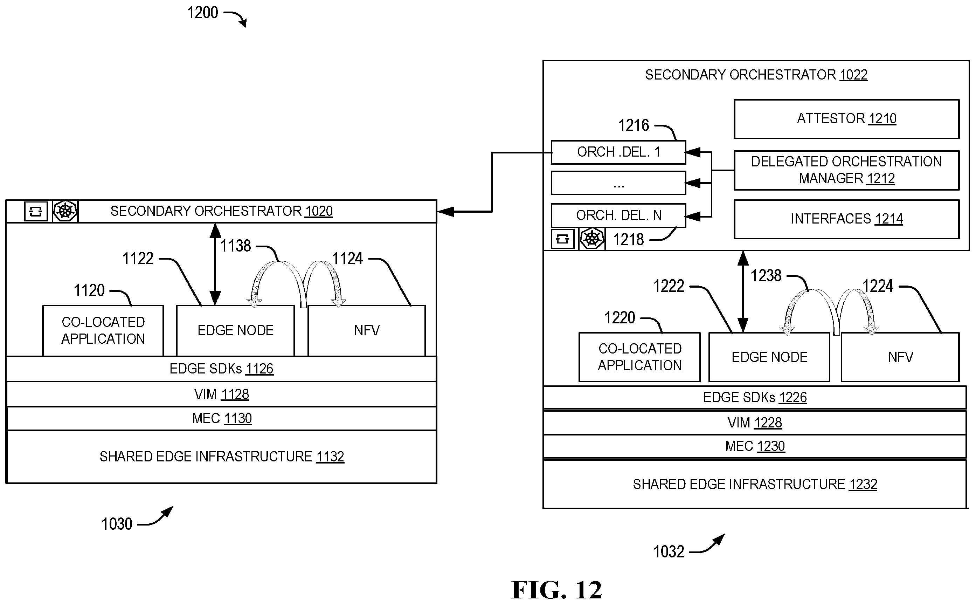

FIG. 12 illustrates another example network architecture 1200 to enable delegation of orchestration among secondary orchestrators 1020-1022. As shown in the example of FIG. 12, the secondary orchestrator 1020 provides service telemetry for configuration and control of software and/or hardware resources such as the co-located application 1120, the edge node 1122, the NFV 1124, etc. The example application 1120, edge node 1122, and/or NFV 1124 can be used to interact with one or more edge SDKs 1126, such as a data plane development kit (DPDK), deep learning and/or other artificial intelligence network model toolkit, etc.

In the example infrastructure 1200, the edge SDKs 1126 execute on top of the VIM 1128, which manages the NFV 1124 and/or other compute, storage, and/or network resources. The example VIM 1128 manages an inventory of allocation of virtual resources to physical resources. Management of the allocation allows for the orchestration of the allocation, upgrade, release, and reclamation of NFV 1124 resources and improvement/optimization of their usage by the orchestrator 1020, for example. The MEC platform 1130 enables cloud computing and services at a network edge and allows the VIM 1128 to interact with the shared edge infrastructure 1132, which includes one or more servers, radios, etc. Alternatively or additionally, the edge node 1122 and/or the NFV 1124 can utilize the LBO switch 1138 to communicate directly with the edge infrastructure 1132 and/or other edge resources, for example.

In the example of FIG. 12, the orchestrator 1022 includes an orchestration stack including an attestor 1210, a delegate manager 1212, one or more interfaces 1214, and one or more orchestration delegates 1216-1218.

As shown in the example of FIG. 12, the secondary orchestrator 1020 provides service telemetry for configuration and control of software and/or hardware resources such as a co-located application 1220, an edge node 1222, an NFV 1224, etc. The example application 1220, edge node 1222, and/or NFV 1224 can be used to interact with one or more edge SDKs 1226, such as a DPDK, deep learning and/or other artificial intelligence network model toolkit, etc.

In the example infrastructure 1200, the edge SDKs 1226 execute on top of a VIM 1228, which manages the NFV 1224 and/or other compute, storage, and/or network resources. The example VIM 1228 manages an inventory of allocation of virtual resources to physical resources. Management of the allocation allows for the orchestration of the allocation, upgrade, release, and reclamation of NFV 1224 resources and improvement/optimization of their usage by the orchestrator 1022, for example. The MEC platform 1230 enables cloud computing and services at a network edge and allows the VIM 1228 to interact with a shared edge infrastructure 1232, which includes one or more servers, radios, etc. Alternatively or additionally, the edge node 1222 and/or the NFV 1224 can utilize the LBO switch 1238 to communicate directly with the edge infrastructure 1232 and/or other edge resources, for example.

Returning to the orchestration stack of the example orchestrator 1022 of FIG. 12, each orchestration delegate 1216-1218 can be implemented as a plugin or orchestration instance representing an edge entity or authority A 1032 that is instantiated within an orchestration stack that runs and manages an edge location owned and managed by an entity B 1030. The example attestor 1210 can be used to validate and/or otherwise verify another orchestrator 1010, 1020, a file (e.g., a binary and/or other executable) sent from another orchestrator 1010, 1020 and/or other source for execution on the edge using the orchestrator 1022, etc. The example interfaces 1214 enable execution of SLA/SLO/other requests, expectations, and/or requirements.

For example, one or more interfaces 1214 can be used to specify a service to execute in conjunction with meta-data (e.g., files, knobs, etc.), SLAs (e.g., amount of resources required, etc.), SLOs (e.g., frames per second, other application KPI, etc.), maximum cost, etc. The orchestrator 1022 can receive the service to be executed via an interface 1214 and can expose an interface 1214 to periodically check a status of one or more executing services. Additionally, the interface 1214 can be used to retrieve historical information to evaluate performance over time, system behavior, etc.

The example delegated orchestration manager 1212 manages the one or more orchestration delegates 1216-1218 to allocate deployment of a service on the edge entity 1030. In certain examples, the edge is owned by Entity B 1030, and the orchestration delegate 1216-1218 can manage a subset of resources of the edge entity 1030 within the deployment. For example, Entity B allows the orchestration delegate 1216-1218 to have control of two nodes 1222 of the edge location 1030. Then the orchestration delegate 1216-1218 can select resources and orchestrate deployment of the service on those resources without working with the orchestrator 1020 of Entity B 1030.

Alternatively or additionally, the orchestration delegate 1216-1218 performs a hand shake with the orchestrator 1020 of Entity B 1030 to manage the edge and coordinate a level of resources to satisfy SLA/SLO/other requirement while trying to minimize or otherwise reduce the cost. The orchestration delegate 1216-1218 can get telemetry from the orchestrator 1020 on demand, periodically, and/or based on a trigger, etc. The telemetry information can be used by the orchestration delegate 1216-1218 to predict future resource usage and identify opportunities for lower cost due to less load. As such, the orchestration delegate 1216-1218 monitors service(s) and performs one or more closed control loops to help ensure that SLO, SLA, etc., are achieved for the service(s), for example. The orchestration delegate 1216-1218 can perform a hand-shake between the edge entity 1030 and its orchestrator 1020 to allocate additional resources when the SLO, SLA, etc., is not being met. In certain examples, the orchestration delegate 1216-1218 contacts the primary orchestrator 1010 to trigger a service migration when the SLO, SLA, etc., is not able to be met by the current edge configuration.

In certain examples, the orchestration delegate 1216-1218 is "on-boarded" or configured for a particular edge location (e.g. owned by Entity B 1030, etc.). To install the orchestration delegate 1216-1218 to orchestrate the edge Entity B 1030, the secondary orchestrator 1022 of the edge Entity A 1032 includes a delegated orchestration module 1216-1218 that is specific to the edge deployment of Entity B 1030. The origin entity A provides the delegate 1216-1218 as a binary along with a signature of the binary. The attestor 1210 communicates with an attestation server (not shown, e.g., owned by a trusted entity such as a certification authority, etc.) to validate the binary. For example, the attestor 1210 can compute a hash of the binary and send the hash, a signature, and the binary to the attestation server to validate the binary. If the attestor 1210 determines that the orchestration delegate 1216-1218 is trustworthy, then the delegated orchestration manager 1212 can trigger instantiation of the orchestration delegate 1216-1218.

As such, the orchestrators 1020-1024 form a mesh of orchestrators 1020-1024 in which each orchestrator 1020-1024 can relay services and/or associated data from one orchestrator 1020-1024 to another orchestrator 1020-1024 and can share in the responsibility to execute services in accordance with defined SLO, SLA, and/or other requirement/obligation. A primary or edge orchestrator 1010 can coordinate operation among the secondary orchestrators 1020-1024 and accommodate for faults, deficiencies, allocation issues, bandwidth, etc., by triggering allocation to a different orchestrator 1020-1024. In some examples, however, the secondary orchestrators 1020-1024 communicate among themselves (e.g., via the orchestration delegates 1216-1218) to migrate a service, reallocate resources, share SLO/SLA responsibility, etc., without the edge orchestrator 1010.

In certain examples, the orchestration delegate 1216-1218 includes a token that includes information regarding a service to be executed, its parameters/constraints, associated SLO/SLA, and/or other information regarding the service. The token can be updated and/or otherwise edited to indicate a progress toward completion (e.g., of execution, to SLO and/or SLA, etc.) for the service. The secondary orchestrator 1022 can pass the token to a next orchestrator 1024 (e.g., via the orchestration delegate 1216-1218, via the interface 1214, via the delegated orchestration manager 1212, etc.) to notify the secondary orchestrator 1024 regarding what the secondary orchestrator 1022 has done and what the secondary orchestrator 1024 now is to do. In certain examples, the secondary orchestrators 1022, 1024 negotiate to determine which edge entity is responsible for which tasks. Such negotiation can occur between the orchestration delegates 1216-1218 and/or the associated delegated orchestration manager 1212, for example.

In certain examples, the edge infrastructure 1000, 1100, 1200 can be extended to include "fog" computing. As noted above, fog computing involves transmitting data from a point of collection to a gateway for processing. The processed data is then sent back to the edge for action. Fog computing uses edge devices and gateways with a local area network (LAN) for the processing. As such the fog can unite the cloud and the edge for data processing, service execution, etc.

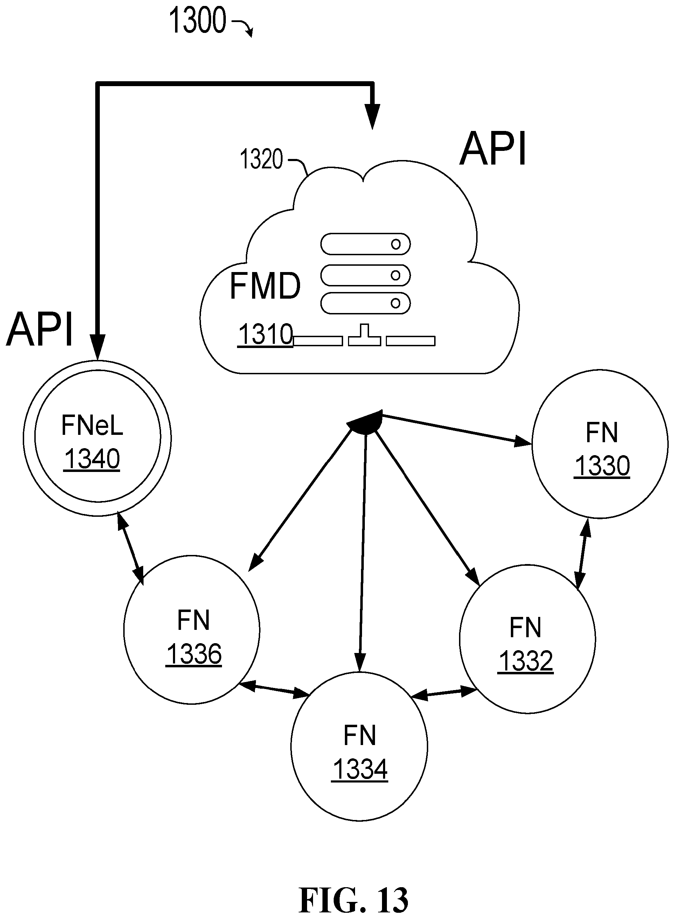

FIG. 13 is a block diagram of an example fog network 1300 including a fog management domain (FMD) 1310 implemented in the cloud and/or on the edge 1320 (e.g., the example edge cloud 210, etc.). The FMD 1310 is in communication with a plurality of fog nodes (FN) 1330-1336 including a fog node elected leader (FNeL) 1340. The FNeL 1340 can be determined by the FMD 1310 and/or by the FNs 1330-1336. The FNeL 1340 and/or the FMD 1310 can manage the set of FNs 1330-1336 and associated resources.

As such, for a contract to execute a service, one or more subcontractual obligations can be delegated to FN(s) 1330-1336 for execution on the edge. Task execution on the FN 1330-1336 can be coordinated using the FMD 1310, FNeL 1340, etc., in conjunction with the primary orchestrator 1010 and/or a secondary orchestrator 1020-1024, for example. Using the FN(s) 1330-1336 and/or the edge node(s) 1122, 1222, etc., a trusted contract for one or more services (e.g., communications, software tracing, etc.) can be separated into functionality to be executed by a plurality of resources such as fog node(s) 1330-1336, edge nodes 1122, 1222, etc.

In certain examples, remediation of problems in the fog 1300, on the edge 1100, 1200, in the cloud, etc., can be automated using the orchestrators 1010, 1020-1024. Tracing of software execution can be used to identify and remediate an issue with execution of a service, for example. Allocated memory can also be increased or decreased depending upon remediation workflow, for example.

Services can be managed, application performance can be monitored and/or adjusted, and services and/or other applications can be allocated among cloud, edge, and fog resources using the orchestrators 1010, 1020-1024. A secondary orchestrator 1020-1024 (e.g., and its delegated orchestration module(s) 1216-1218, etc.) can manage execution on a particular edge or fog entity 1030-1032, while the primary or edge orchestrator 1010 manages execution and resources across edge, fog, and/or cloud infrastructure, for example. Multiple orchestration, resource management, security, and/or other policies can be coordinated by the primary orchestrator 1010, for example. Interfaces and/or APIs can be exposed for interaction between orchestrators 1020-1024, for example.

The set of orchestrators 1020-1024 acts as a mesh of brokers or proxies to enable transparency between architectures. The mesh of orchestrators 1020-1024 enables cross-platform awareness of service flow, SLO, SLA, etc. Each secondary orchestrator 1020-1024 acts on behalf of an associated edge entity 1030-1034 to execute a service on the entity 1030-1034, move all or part of the service execution to another entity 1030-1034, etc. The primary orchestrator 1010 oversees the mesh of secondary orchestrators 1020-1024 and helps ensure communication among the mesh of orchestrators 1020-1024 to execute service(s) according to their associated contract/SLA/SLO with a given quality of service (QoS), for example.

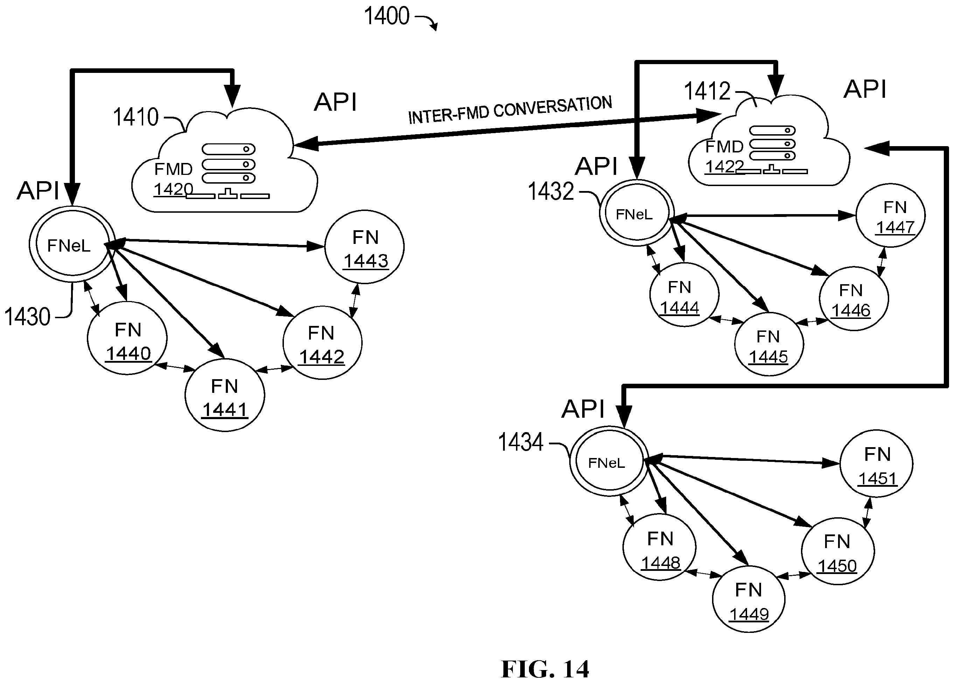

FIG. 14 is an example network infrastructure 1400 in which a plurality of edge/cloud resources 1410-1412 house a plurality of FMD 1420-1422, which communicate with FNeL 1430-1434 to coordinate resource allocation, configuration, and/or other activity among a plurality of FN 1440-1451. As such, an orchestrator can be implemented in each FMD 1420-1422 to coordinate resource allocation, configuration, and/or other activity, for example. Alternatively or additionally, a secondary orchestrator can be implemented in each FNeL 1430-1432, with a primary orchestrator in each FMD 1420-1422 to coordinate among the secondary orchestrators, for example.

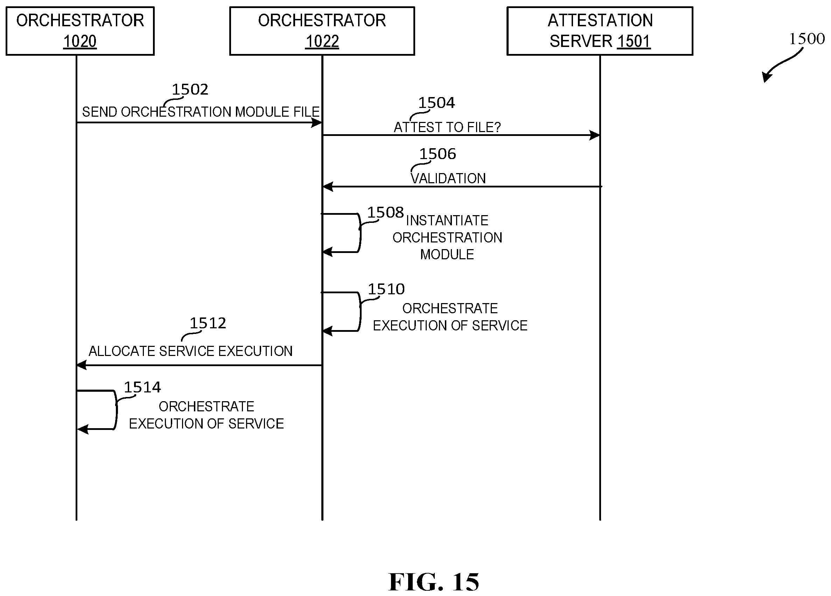

FIG. 15 shows an example data flow 1500 between the orchestrator 1020, the orchestrator 1022, and an attestation server 1501 to configure the orchestration delegate(s) 1216-1218 and facilitate execution of a service and allocation of additional resource(s) to execute the service, for example. At 1502, an orchestration delegate file (e.g., a binary representing the orchestration delegate 1216-1218, etc.) is provided from the orchestrator 1020 to the orchestrator 1022. At 1504, the orchestrator 1022 requests validation of the file by the attestation server 1501. The attestation server 1501 can validate the file by computing a hash, analyzing a signature, evaluating a source of the file, etc. At 1506, when the file is validated, the validation is sent back to the orchestrator 1022. At 1508, the orchestrator 1022 instantiates the orchestration delegate 1216-1218 from the file.

At 1510, execution of a service is orchestrated using the orchestration delegate 1216-1218. The orchestration delegate 1216-1218 can include information regarding the edge (or fog) entity 1030-1032 on which the service is to execute as well as a contract and associated SLO, SLA, etc., governing execution of the service. At 1512, as the orchestrator 1022 can determine that additional/alternate resources should be allocated for execution of the service and trigger allocation to the orchestrator 1020. At 1514, the orchestrator 1020 assumes responsibility for execution of the service. As such, the orchestrators 1020, 1022 can collaborate to help ensure execution of the service with appropriate resources to satisfy a contract and/or other SLO/SLA governing execution of the service.

The example primary orchestrator 1010, the example secondary orchestrators 1020-1024, the example edge entities 1030-1034, the example end-to-end service logic 1110, the example application 1120, the example edge node 1122, 1222, the example NFV 1124, 1142, 1224, the example edge SDK 1126, 1226, the example VIM 1128, 1148, 1228, the example MEC 1130, 1230, the example shared edge infrastructure 1132, 1232, the example edge resources 1134-1136, 1154, the example LBO switch 1138, 1238, the example backhaul 1140, the example control plane 1144, the example cloud platform 1150, the example shared data center 1152, the example attestor 1210, the example delegated orchestration manager 1212, the example interface(s) 1214, the example orchestration delegators 1216-1218, the example FMD 1310, 1420, 1422, the example cloud/edge 1320, 1410, 1412, the example FNeL 1340, 1430-1434, the example FN 1330-1336, 1440-1451, the example attestation server 1501, and/or, more generally, the example edge infrastructure 1000, 1100, 1200 and/or the example fog infrastructure 1300, 1400 of the illustrated examples of FIGS. 10-15 is/are implemented by a logic circuit such as a hardware processor. However, any other type of circuitry can additionally or alternatively be used such as one or more analog or digital circuit(s), logic circuits, programmable processor(s), , application specific integrated circuit(s) (ASIC(s)), programmable logic device(s) (PLD(s)), field programmable logic device(s) (FPLD(s)), digital signal processor(s) (DSP(s)), Coarse Grained Reduced precision architecture (CGRA(s)), image signal processor(s) (ISP(s)), etc. In some examples, the example primary orchestrator 1010, the example secondary orchestrators 1020-1024, the example edge entities 1030-1034, the example end-to-end service logic 1110, the example application 1120, the example edge node 1122, 1222, the example NFV 1124, 1142, 1224, the example edge SDK 1126, 1226, the example VIM 1128, 1148, 1228, the example MEC 1130, 1230, the example shared edge infrastructure 1132, 1232, the example edge resources 1134-1136, 1154, the example LBO switch 1138, 1238, the example backhaul 1140, the example control plane 1144, the example cloud platform 1150, the example shared data center 1152, the example attestor 1210, the example delegated orchestration manager 1212, the example interface(s) 1214, the example orchestration delegators 1216-1218, the example FMD 1310, 1420, 1422, the example cloud/edge 1320, 1410, 1412, the example FNeL 1340, 1430-1434, the example FN 1330-1336, 1440-1451, the example attestation server 1501, and/or, more generally, the example edge infrastructure 1000, 1100, 1200 and/or the example fog infrastructure 1300, 1400 are implemented by separate logic circuits. In some examples, the example delegated orchestrator manager 1212 implements means for processing. In some examples, the example orchestrated delegate 1216-1218 implements means for allocating. In some examples, the example orchestrated delegated 1216-1218 implements means for monitoring.

While example implementations of the distributed computing infrastructure 1000 of FIG. 10 are illustrated in FIGS. 11-14, one or more of the elements, processes and/or devices illustrated in FIGS. 11-14 can be combined, divided, re-arranged, omitted, eliminated and/or implemented in any other way. Further, the example primary orchestrator 1010, the example secondary orchestrators 1020-1024, the example edge entities 1030-1034, the example end-to-end service logic 1110, the example application 1120, the example edge node 1122, 1222, the example NFV 1124, 1142, 1224, the example edge SDK 1126, 1226, the example VIM 1128, 1148, 1228, the example MEC 1130, 1230, the example shared edge infrastructure 1132, 1232, the example edge resources 1134-1136, 1154, the example LBO switch 1138, 1238, the example backhaul 1140, the example control plane 1144, the example cloud platform 1150, the example shared data center 1152, the example attestor 1210, the example delegated orchestration manager 1212, the example interface(s) 1214, the example orchestration delegators 1216-1218, the example FMD 1310, 1420, 1422, the example cloud/edge 1320, 1410, 1412, the example FNeL 1340, 1430-1434, the example FN 1330-1336, 1440-1451, the example attestation server 1501, and/or, more generally, the example edge infrastructure 1000, 1100, 1200 and/or the example fog infrastructure 1300, 1400 can be implemented by hardware, software, firmware and/or any combination of hardware, software and/or firmware. Thus, for example, any of the example primary orchestrator 1010, the example secondary orchestrators 1020-1024, the example edge entities 1030-1034, the example end-to-end service logic 1110, the example application 1120, the example edge node 1122, 1222, the example NFV 1124, 1142, 1224, the example edge SDK 1126, 1226, the example VIM 1128, 1148, 1228, the example MEC 1130, 1230, the example shared edge infrastructure 1132, 1232, the example edge resources 1134-1136, 1154, the example LBO switch 1138, 1238, the example backhaul 1140, the example control plane 1144, the example cloud platform 1150, the example shared data center 1152, the example attestor 1210, the example delegated orchestration manager 1212, the example interface(s) 1214, the example orchestration delegators 1216-1218, the example FMD 1310, 1420, 1422, the example cloud/edge 1320, 1410, 1412, the example FNeL 1340, 1430-1434, the example FN 1330-1336, 1440-1451, the example attestation server 1501, and/or, more generally, the example edge infrastructure 1000, 1100, 1200 and/or the example fog infrastructure 1300, 1400 can be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example primary orchestrator 1010, the example secondary orchestrators 1020-1024, the example edge entities 1030-1034, the example end-to-end service logic 1110, the example application 1120, the example edge node 1122, 1222, the example NFV 1124, 1142, 1224, the example edge SDK 1126, 1226, the example VIM 1128, 1148, 1228, the example MEC 1130, 1230, the example shared edge infrastructure 1132, 1232, the example edge resources 1134-1136, 1154, the example LBO switch 1138, 1238, the example backhaul 1140, the example control plane 1144, the example cloud platform 1150, the example shared data center 1152, the example attestor 1210, the example delegated orchestration manager 1212, the example interface(s) 1214, the example orchestration delegators 1216-1218, the example FMD 1310, 1420, 1422, the example cloud/edge 1320, 1410, 1412, the example FNeL 1340, 1430-1434, the example FN 1330-1336, 1440-1451, the example attestation server 1501, and/or, more generally, the example edge infrastructure 1000, 1100, 1200 and/or the example fog infrastructure 1300, 1400 is/are hereby expressly defined to include a non-transitory computer readable storage device or storage disk such as a memory, a digital versatile disk (DVD), a compact disk (CD), a Blu-ray disk, etc. including the software and/or firmware. Further still, the example network infrastructure 1000, 1100, 1200, 1300, 1400 of FIGS. 10-14, etc., can include one or more elements, processes and/or devices in addition to, or instead of, those illustrated in FIGS. 10-15, and/or can include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

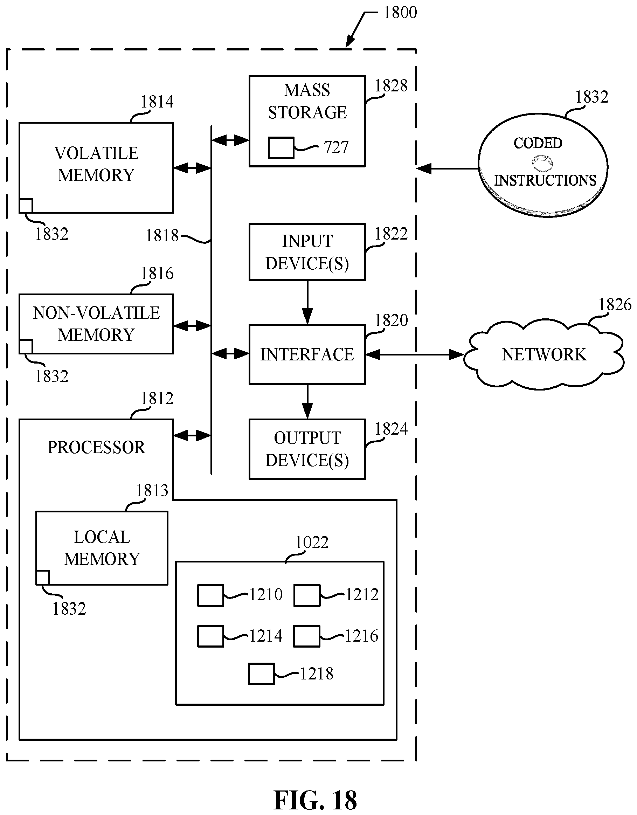

Flowcharts representative of example hardware logic, machine readable instructions, hardware implemented state machines, and/or any combination thereof for implementing the example distributed network computing infrastructure 1000-1400 of FIGS. 10-14 is shown in FIGS. 16-17. The machine readable instructions can be one or more executable programs or portion(s) of an executable program for execution by a computer processor and/or processor circuitry, such as the processor 1812 shown in the example processor platform 1800 discussed below in connection with FIG. 18 (and/or the example compute node 800 of FIG. 8A, the example edge computing node 850 of FIG. 8B, etc.). The program may be embodied in software stored on a non-transitory computer readable storage medium such as a CD-ROM, a floppy disk, a hard drive, a DVD, a Blu-ray disk, or a memory associated with the processor 1812, but the entire program and/or parts thereof could alternatively be executed by a device other than the processor 1812 and/or embodied in firmware or dedicated hardware. Further, although the example program is described with reference to the flowcharts illustrated in FIGS. 16-17, many other methods of implementing the example distributed network computing infrastructure 1000-1400 can alternatively be used. For example, the order of execution of the blocks can be changed, and/or some of the blocks described can be changed, eliminated, or combined. Additionally or alternatively, any or all of the blocks can be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry can be distributed in different network locations and/or local to one or more devices (e.g., a multi-core processor in a single machine, multiple processors distributed across a server rack, etc.).

The machine readable instructions described herein can be stored in one or more of a compressed format, an encrypted format, a fragmented format, a compiled format, an executable format, a packaged format, etc. Machine readable instructions as described herein can be stored as data or a data structure (e.g., portions of instructions, code, representations of code, etc.) that may be utilized to create, manufacture, and/or produce machine executable instructions. For example, the machine readable instructions can be fragmented and stored on one or more storage devices and/or computing devices (e.g., servers) located at the same or different locations of a network or collection of networks (e.g., in the cloud, in edge devices, etc.). The machine readable instructions may involve one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions can be stored in multiple parts, which are individually compressed, encrypted, and stored on separate computing devices, wherein the parts when decrypted, decompressed, and combined form a set of executable instructions that implement one or more functions that can together form a program such as that described herein.

In another example, the machine readable instructions can be stored in a state in which they can be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

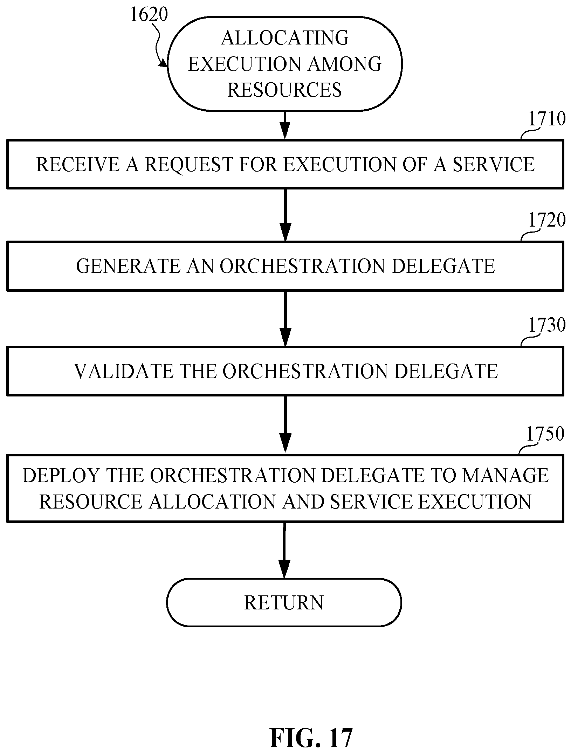

As mentioned above, the example processes of FIGS. 16 and/or 17 can be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 16 is a flowchart representative of example machine-readable instructions that can be executed to implement the example network computing infrastructure 1000 of FIGS. 10-15. The example process 1600 of the illustrated example of FIG. 16 begins when the example primary orchestrator 1010 processes a contract and/or other request for execution of a service. (Block 1610). For example, the primary orchestrator 1010 processes a contract providing an SLA and one or more associated SLOs for execution of the software, in connection with dynamic tracing for software development, etc. The primary orchestrator 1010 processes constraints, parameters, etc., associated with the request to determine resources to be involved in executing the service, for example. In certain examples, information such as contract requirements, constraints, service parameters, etc., can be organized into a token.

The primary orchestrator 1010 allocates execution of the contract and its service among resources via the secondary orchestrators 1020-1024. (Block 1620). For example, the primary orchestrator 1010 conveys tasks associated with execution of the service to one or more secondary orchestrators 1020-1024 to orchestrate or manage execution of the service using hardware and/or software computing resources in the networking computing infrastructure 1000-1400. In certain examples, the primary orchestrator 1010 conveys a token indicative of a status of the contract and/or associated service, task(s) to be performed by particular resources, other parameters, constraints, etc.

The secondary orchestrator(s) 1020-1024 monitor execution of the service and/or associated contract. (Block 1630). For example, the secondary orchestrator(s) 1020-1024 monitor execution of the service and/or service task(s) on edge, cloud, and/or fog computing resources in their associated domain 1030-1034. The secondary orchestrator(s) 1020-1024 can compare task/service execution with one or more SLO/SLA associated with the service contract to determine whether the execution is satisfying contract restrictions/requirements. (Block 1640).

When execution is not satisfying contract restrictions/requirements (e.g., appears likely to break an SLO, SLA, etc., associated with the service contract, etc.), then the secondary orchestrator(s) 1020-1024 can adjust allocation of the contract among resources. (Block 1650). For example, a first secondary orchestrator 1020-1024 can allocate or assign the service and/or task(s) associated with the service to a second secondary orchestrator 1020-1024. In certain examples, the token can be updated by the first secondary orchestrator 1020-1024 to reflect what has been completed by the first secondary orchestrator 1020-1024 and passed from the first secondary orchestrator 1020-1024 to the second secondary orchestrator 1020-1024 so that the second secondary orchestrator 1020-1024 understands what is to be done.

Control continues as in Block 1630 to monitor execution unless the service has been executed and the contract complete. (Block 1660). When complete, the example process 1600 of the illustrated example of FIG. 16 then terminates but may be repeated in response to a subsequent request.

FIG. 17 is a flowchart providing further example detail regarding allocating execution of the contract and its service among resources via the secondary orchestrators 1020-1024 (Block 1620 of the example of FIG. 16). The example delegated orchestration manager 1212 (FIG. 12) receives a request for execution of a service (e.g., in connection with a contract providing an SLA and one or more associated SLOs for execution of the software, in connection with dynamic tracing for software development, etc.). (Block 1710). For example, the delegated orchestration manager 1212 receives a request from the primary orchestrator 1010 and/or other source to execute an application or other service according to constraints/parameters specified in a contract or SLA. The constraints, parameters, status, assignment, etc., can be represented in a token provided by the primary orchestrator 1010, for example.

In response to the request, the example delegated orchestration manager 1212 generates an orchestration delegate 1216-1218. (Block 1720). For example, the delegated orchestration manager 1212 generates a binary executable file representing the orchestration delegate 1216-1218. The example attestor 1210 validates or otherwise verifies the authenticity, trustworthiness, source, integrity, etc., of the file. (Block 1730). For example, the attestor 1210 can communicate with an attestation server to compute and verify a hash and/or other signature associated with the file and its source. Following validation, the example delegated orchestration manager 1212 deploys the example orchestration delegate 1216-1218 to manage resource allocation and execution of the service. (Block 1740). Control reverts to block 1630 to monitor execution of the service and resource allocation of the entity 1030-1034 associated with the orchestrator 1020-1024, for example. The example process 1620 can be repeated when additional services, tasks, etc., are deployed for execution.

FIG. 18 is a block diagram of an example processor platform 1100 structured to execute the instructions of FIGS. 16-17 to implement the example network computing infrastructure 1000 of FIGS. 10-15. The processor platform 1800 can be, for example, a server, a personal computer, a workstation, a self-learning machine (e.g., a neural network), a mobile device (e.g., a cell phone, a smart phone, a tablet such as an iPad^{™}), an Internet appliance, a gaming console, a headset or other wearable device, or other type of computing device.

The processor platform 1800 of the illustrated example includes a processor 1812. The processor 1812 of the illustrated example is hardware. For example, the processor 1812 can be implemented by one or more integrated circuits, logic circuits, microprocessors, GPUs, DSPs, or controllers from any desired family or manufacturer. The hardware processor may be a semiconductor based (e.g., silicon based) device. In this example, the processor 1812 implements the example secondary orchestrator 1022. The example secondary orchestrator 1022 includes the example attestor 1210, the example delegated orchestration manager 1212, the example interface(s) 1214, and the example orchestration delegate 1216-1218. The example processor 1812 can similarly implement the example secondary orchestrators 1020, 1024, the example primary orchestrator 1010, etc.

The processor 1812 of the illustrated example includes a local memory 1813 (e.g., a cache). The processor 1812 of the illustrated example is in communication with a main memory including a volatile memory 1814 and a non-volatile memory 1816 via a bus 1818. The volatile memory 1814 can be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 1816 can be implemented by flash memory and/or any other desired type of memory device. Access to the main memory 1814, 1816 is controlled by a memory controller.

The processor platform 1800 of the illustrated example also includes an interface circuit 1820. The interface circuit 1820 can be implemented by any type of interface standard, such as an Ethernet interface, a universal serial bus (USB), a Bluetooth^{®} interface, a near field communication (NFC) interface, and/or a PCI express interface.

In the illustrated example, one or more input devices 1822 are connected to the interface circuit 1820. The input device(s) 1822 permit(s) a user to enter data and/or commands into the processor 1812. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1824 are also connected to the interface circuit 1820 of the illustrated example. The output devices 1824 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1820 of the illustrated example, thus, typically includes a graphics driver card, a graphics driver chip, and/or a graphics driver processor.

The interface circuit 1820 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1826. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1800 of the illustrated example also includes one or more mass storage devices 1828 for storing software and/or data. Examples of such mass storage devices 1828 include floppy disk drives, hard drive disks, compact disk drives, Blu-ray disk drives, redundant array of independent disks (RAID) systems, and digital versatile disk (DVD) drives.

The machine executable instructions 1832 of FIGS. 16-17 can be stored in the mass storage device 1828, in the volatile memory 1814, in the non-volatile memory 1816, and/or on a removable non-transitory computer readable storage medium such as a CD or DVD.

From the foregoing, it will be appreciated that example methods, apparatus, systems, and articles of manufacture have been disclosed that enable dynamic management of services and/or other processes on a multi-edge network computing infrastructure. Certain examples establish a mesh of orchestrators to share in the execution of services via an edge computing platform. Certain examples provide an orchestrator of the mesh of orchestrators to coordinate allocation, monitoring, and adjustment of applications, processes, and other services across a network infrastructure and controlled across device, construct, and privilege boundaries. The disclosed methods, apparatus, systems, and articles of manufacture improve the efficiency of using a computing device by enabling efficient, effective monitoring and management of resources across a distributed system at the cloud, edge, and fog levels. Disclosed methods, apparatus and articles of manufacture are accordingly directed to one or more improvement(s) in the functioning of a computer.

Certain examples enable a mesh of orchestrators to monitor SLAs of an application during execution of the application and compare the monitored SLA data to a provided SLA. Certain examples enable the orchestrators to distribute and/or otherwise reallocate resources among the orchestrators to help ensure that the provided SLA is met by the executing application. For example, memory allocation can dynamically be adjusted across edge boundaries to accommodate the application and/or other service execution. Certain examples instantiate an orchestrator or delegated orchestration module in memory, as part of computing platform hardware, on a local edge node or device, etc. In certain examples, the orchestrator is executing on an FPGA and/or accelerator running on a computing entity to manage services assigned to an edge device on behalf of that computing entity. Tokens can be used, for example, to enable one orchestrator to pass an indication of what has been completed and what remains to be done to another orchestrator. Certain examples enable negotiation between orchestrators (e.g., facilitated by a primary edge orchestrator, etc.) to determine which orchestrator is to handle which task for execution of the application/service.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

Example methods, apparatus, systems, and articles of manufacture to dynamically control orchestration of meshes in a cloud-edge computing environment are disclosed herein. Further examples and combinations thereof include the following:
Example 1 is an orchestrator apparatus including: an interface to receive a service to be executed and monitor execution of the service; an orchestration delegate to select resources and orchestrate deployment of the service to execute using the selected resources; and a delegated orchestration manager to manage the orchestration delegate based on (a) information from the interface and (b) information corresponding to execution of the service by the orchestration delegate.
Example 2 includes example 1, wherein the orchestrator apparatus is in communication with an edge orchestrator to receive instructions from the edge orchestrator regarding execution of the service.
Example 3 includes example 2, wherein the orchestrator apparatus is part of a mesh of orchestrators to be managed by the edge orchestrator.
Example 4 includes example 1, wherein the orchestration delegate and the delegated orchestration manager are to adjust resource allocation to comply with a contract associated with the execution of the service.
Example 5 includes example 4, wherein the adjustment of resource allocation is to occur across edge computing entities.
Example 6 includes example 1, wherein the resources are implemented in at least one of an edge, fog, or cloud computing entity.
Example 7 includes example 1, wherein the orchestrator apparatus is instantiated in at least one of an edge, fog, or cloud computing entity.
Example 8 includes example 1, wherein the orchestration delegate is to be instantiated on a first computing entity and wherein the service is deployed for executing using resources on a second computing entity.
Example 9 includes example 1, wherein the orchestration delegate is to be instantiated using an attested binary file.
Example 10 includes example 1, further including a plurality of orchestration delegates to orchestrate a plurality of services.
Example 11 includes example 1, further including a plurality of interfaces to receive the service to be executed, to monitor execution of the service, and to retrieve historical information to evaluate performance over time.
Example 12 includes example 1, further including an attestor to validate the orchestration delegate.
Example 13 is at least one non-transitory computer readable storage medium including instructions that, when executed, cause at least one processor to at least: process a request for execution of a service in an edge cloud infrastructure; allocate execution of the service among resources via at least one orchestrator; monitor execution of the service; and, when the monitored execution of the service does not satisfy the request, adjust, using the at least one orchestrator, allocation of the resources for the execution of the service.
Example 14 includes example 13, wherein the at least one processor is part of a mesh of orchestrators to be managed by an edge orchestrator, and wherein the instructions, when executed, cause the at least one processor to adjust, in communication with the edge orchestrator, the allocation of the resources for the execution of the service.
Example 15 includes example 13, wherein the at least one processor is to allocate execution of the service among resources by at least: generating an orchestration delegate to select resources and orchestrate deployment of the service to execute using the selected resources; and deploying the orchestration delegate to manage allocation of resources and execution of the service.
Example 16 includes example 15, wherein the at least one processor is to allocate execution of the service among resources by at least validating the orchestration delegate, the orchestration delegate implemented in at least one of an edge, fog, or cloud computing entity.
Example 17 is method of orchestrating execution of a service in an edge computing environment, the method including: processing, by executing an instruction with at least one processor, a request for execution of a service in an edge cloud infrastructure; allocating, by executing an instruction with the at least one processor, execution of the service among resources via at least one orchestrator; monitoring execution of the service; and when the monitored execution of the service does not satisfy the request, adjusting, using the at least one orchestrator, allocation of the resources for the execution of the service.
Example 18 includes example 17, wherein the at least one processor is part of a mesh of orchestrators to be managed by an edge orchestrator, and wherein adjusting the allocation of the sources occurs in communication with the edge orchestrator.
Example 19 includes example 17, wherein allocating execution of the service among resources includes: generating an orchestration delegate to select resources and orchestrate deployment of the service to execute using the selected resources; and deploying the orchestration delegate to manage allocation of resources and execution of the service.
Example 20 includes example 19, wherein allocating execution of the service among resources includes validating the orchestration delegate, the orchestration delegate implemented in at least one of an edge, fog, or cloud computing entity.
Example 21 is an edge resource orchestrator including: memory circuitry to include instructions; and at least one processor to execute the instructions to at least: process a request for execution of a service in an edge cloud infrastructure; allocate execution of the service among resources; monitor execution of the service; and, when the monitored execution of the service does not satisfy the request, adjust allocation of the resources for the execution of the service.
Example 22 includes example 21, wherein the edge resource orchestrator is a secondary orchestrator that is part of a mesh of orchestrators to be managed by a primary orchestrator, and wherein the instructions, when executed, cause the at least one processor to adjust, in communication with the primary orchestrator, the allocation of the resources for the execution of the service.
Example 23 includes example 22, wherein the at least one processor is to allocate execution of the service among resources by at least: generating an orchestration delegate to select resources and orchestrate deployment of the service to execute using the selected resources; and deploying the orchestration delegate to manage allocation of resources and execution of the service.
Example 24 includes example 23, wherein the at least one processor is to allocate execution of the service among resources by at least validating the orchestration delegate, the orchestration delegate implemented in at least one of an edge, fog, or cloud computing entity.
Example 25 is a primary orchestrator in communication with a mesh of secondary orchestrators to allocate resources for execution of services in an edge cloud environment, the primary orchestrator including: memory circuitry to include instructions; and at least one processor to execute the instructions to at least: process a request for execution of a service in the edge cloud environment; allocate execution of the service among the mesh of secondary orchestrators; monitor execution of the service; and, when the monitored execution of the service does not satisfy the request, adjust allocation of the execution of the service among the mesh of secondary orchestrators.
Example 26 is an edge device including: a first edge node to execute a service; and an orchestrator to: process a request for execution of the service; allocate execution of the service to the edge node; monitor execution of the service; and, when the monitored execution of the service does not satisfy the request, adjust allocation of the execution of the service to a second edge node.
Example 27 includes example 26, wherein the edge device is a first edge device, and wherein the second edge node is located on a second edge device.
Example 28 is an apparatus including: means for processing a request for execution of a service in an edge cloud infrastructure; means for allocating execution of the service among resources; and means for monitoring execution of the service, wherein, when the monitored execution of the service does not satisfy the request, the means for allocating is to adjust allocation of the resources for the execution of the service.
In Example 29, the subject matter of any one or more of Examples 1-28 includes a combination of edge, cloud, and fog resources.
In Example 30, the subject matter of any one or more of Examples 1-28 includes a combination of one or more edge orchestrators, cloud orchestrators, and fog orchestrators.
Example 31 includes any one or more of Examples 1-12, further including a plurality of orchestration delegates arranged across one or more device, construct, or privilege boundaries.
Example 32 is a dynamically-allocated memory infrastructure to implement any of Examples 1-31.
Example 33 includes any of Examples 1-31 in which a service level agreement is monitored during execution and compared to a provided service level agreement to enable at least one of distribution or re-allocation of resources to align the monitored service level agreement with the provided service level agreement.
Example 34 is an edge computing node including processing circuitry to perform any of Examples 17-20.
Example 35 is a system including: means for processing a request for execution of a service in an edge cloud infrastructure; means for allocating execution of the service among resources via at least one orchestrator; monitoring execution of the service; and means for adjusting, when the monitored execution of the service does not satisfy the request, allocation of the resources for the execution of the service.
Example 36 includes example 35, wherein the means form part of a mesh of orchestrators to be managed by an edge orchestrator, and wherein the means for adjusting the allocation of the sources operates in communication with the edge orchestrator.
Example 37 includes any of examples 35-36, wherein the means for allocating execution of the service among resources allocates by: generating an orchestration delegate to select resources and orchestrate deployment of the service to execute using the selected resources; and deploying the orchestration delegate to manage allocation of resources and execution of the service.
Example 38 includes any of examples 35-37, wherein the means for allocating execution of the service among resources allocates by validating the orchestration delegate, the orchestration delegate implemented in at least one of an edge, fog, or cloud computing entity.

## Claims

1. An orchestrator apparatus (1020-1024) comprising:
an interface (1214) to:
receive a service to be executed; and
monitor execution of the service;
an orchestration delegate (1216-1218) to:
select resources, wherein the resources are implemented in at least one of an edge, fog, or cloud computing entity (1030-1034); and
orchestrate deployment of the service to execute using the selected resources; and a delegated orchestration manager (1212) to:
manage the orchestration delegate based on (a) information from the interface and (b) information corresponding to execution of the service by the orchestration delegate; and
wherein the orchestrator apparatus is in communication with an edge orchestrator (1010) to receive instructions from the edge orchestrator regarding execution of the service;
wherein the orchestrator apparatus is part of a mesh of orchestrators to be managed by the edge orchestrator; and
wherein the service has been delegated to the orchestrator apparatus from another of the mesh of orchestrators by the edge orchestrator.

2. The apparatus of claim 1, wherein the orchestration delegate and the delegated orchestration manager are to adjust resource allocation to comply with a contract associated with the execution of the service.

3. The apparatus of claim 2, wherein the adjustment of resource allocation is to occur across edge computing entities.

4. The apparatus of claim **1,** wherein the orchestrator apparatus is instantiated in at least one of an edge, fog, or cloud computing entity.

5. The apparatus of claim 1, wherein the orchestration delegate is to be instantiated on a first computing entity and wherein the service is deployed for executing using resources on a second computing entity.

6. The apparatus of claim 1, further including a plurality of orchestration delegates to orchestrate a plurality of services.

7. The apparatus of claim **1,** further including a plurality of interfaces to receive the service to be executed, to monitor execution of the service, and to retrieve historical information to evaluate performance over time.

8. The apparatus of claim 1, further including an attestor to validate the orchestration delegate.

9. A method of orchestrating execution of a service in an edge computing environment, the method comprising:
processing (1610), by executing an instruction with at least one processor, a request for execution of a service in an edge cloud infrastructure;
allocating (1620), by executing an instruction with the at least one processor, execution of the service among resources via at least one orchestrator;
monitoring (1630) execution of the service; and
when the monitored execution of the service does not satisfy the request, adjusting, using the at least one orchestrator, allocation of the resources for the execution of the service; and
wherein the at least one orchestrator is part of a mesh of orchestrators to be managed by an edge orchestrator, and wherein adjusting the allocation of the resources occurs in communication with the edge orchestrator; and
wherein the service has been delegated to the at least one orchestrator from another of the mesh of orchestrators by the edge orchestrator.

10. The method of claim 9, wherein allocating execution of the service among resources includes:
generating an orchestration delegate to select resources and orchestrate deployment of the service to execute using the selected resources; and
deploying the orchestration delegate to manage allocation of resources and execution of the service.

11. The method of claim 10, wherein allocating execution of the service among resources includes validating the orchestration delegate, the orchestration delegate implemented in at least one of an edge, fog, or cloud computing entity.

12. A computer-readable medium including instructions that, when executed by the apparatus of any of claims 1 to 8, implement the method of any of claims 9-11.

## Patentansprüche

1. Orchestratoreinrichtung (1020-1024), die Folgendes umfasst:
eine Schnittstelle (1214) zum:
Empfangen eines auszuführenden Dienstes; und
Überwachen der Ausführung des Dienstes;
einen Orchestrierungsdelegierten (1216-1218) zum:
Auswählen von Ressourcen, wobei die Ressourcen in einer Edge- und/oder Fog- und/oder Cloud-Computing-Entität (1030-1034) implementiert sind; und
Orchestrieren der Bereitstellung des Dienstes zur Ausführung unter Verwendung der ausgewählten Ressourcen;
und einen delegierten Orchestrierungsmanager (1212) zum:
Verwalten des Orchestrierungsdelegierten basierend auf (a) Informationen von der Schnittstelle und (b) Informationen, die der Ausführung des Dienstes durch den Orchestrierungsdelegierten entsprechen; und
wobei die Orchestratoreinrichtung in Kommunikation mit einem Edge-Orchestrator (1010) steht, um Anweisungen von dem Edge-Orchestrator bezüglich der Ausführung des Dienstes zu empfangen;
wobei die Orchestratoreinrichtung Teil eines Netzes von Orchestratoren ist, die durch den Edge-Orchestrator zu verwalten sind; und
wobei der Dienst durch den Edge-Orchestrator von einem anderen des Netzes von Orchestratoren an die Orchestratoreinrichtung delegiert wurde.

2. Einrichtung nach Anspruch 1, wobei der Orchestrierungsdelegierte und der delegierte Orchestrierungsmanager die Ressourcenzuweisung anpassen sollen, um einem mit der Ausführung des Dienstes assoziierten Vertrag zu entsprechen.

3. Einrichtung nach Anspruch 2, wobei die Anpassung der Ressourcenzuweisung über Edge-Computing-Entitäten hinweg erfolgen soll.

4. Einrichtung nach Anspruch 1, wobei die Orchestratoreinrichtung in einer Edge- und/oder Fog- und/oder Cloud-Computing-Entität instanziiert ist.

5. Einrichtung nach Anspruch 1, wobei der Orchestrierungsdelegierte auf einer ersten Rechenentität instanziiert werden soll und wobei der Dienst zum Ausführen unter Verwendung von Ressourcen auf einer zweiten Rechenentität bereitgestellt wird.

6. Einrichtung nach Anspruch 1, die ferner mehrere Orchestrierungsdelegierte zum Orchestrieren mehrerer Dienste beinhaltet.

7. Einrichtung nach Anspruch 1, die ferner mehrere Schnittstellen zum Empfangen des auszuführenden Dienstes, zum Überwachen der Ausführung des Dienstes und zum Abrufen historischer Informationen zum Evaluieren der Leistungsfähigkeit im Laufe der Zeit beinhaltet.

8. Einrichtung nach Anspruch 1, die ferner einen Attestor zum Validieren des Orchestrierungsdelegierten beinhaltet.

9. Verfahren zum Orchestrieren der Ausführung eines Dienstes in einer Edge-Computing-Umgebung, wobei das Verfahren Folgendes umfasst:
Verarbeiten (1610), durch Ausführen einer Anweisung mit mindestens einem Prozessor, einer Anforderung zur Ausführung eines Dienstes in einer Edge-Cloud-Infrastruktur;
Zuweisen (1620), durch Ausführen einer Anweisung mit dem mindestens einen Prozessor, der Ausführung des Dienstes unter Ressourcen über mindestens einen Orchestrator; Überwachen (1630) der Ausführung des Dienstes; und
wenn die überwachte Ausführung des Dienstes die Anforderung nicht erfüllt, Anpassen, unter Verwendung des mindestens einen Orchestrators, der Zuweisung der Ressourcen für die Ausführung des Dienstes; und
wobei der mindestens eine Orchestrator Teil eines Netzes von Orchestratoren ist, die durch einen Edge-Orchestrator zu verwalten sind, und wobei das Anpassen der Zuweisung der Ressourcen in Kommunikation mit dem Edge-Orchestrator erfolgt; und
wobei der Dienst durch den Edge-Orchestrator von einem anderen des Netzes von Orchestratoren an den mindestens einen Orchestrator delegiert wurde.

10. Verfahren nach Anspruch 9, wobei das Zuweisen der Ausführung des Dienstes unter Ressourcen Folgendes beinhaltet:
Erzeugen eines Orchestrierungsdelegierten zum Auswählen von Ressourcen und Orchestrieren der Bereitstellung des Dienstes zum Ausführen unter Verwendung der ausgewählten Ressourcen; und
Bereitstellen des Orchestrierungsdelegierten, um die Zuweisung von Ressourcen und die Ausführung des Dienstes zu verwalten.

11. Verfahren nach Anspruch 10, wobei das Zuweisen der Ausführung des Dienstes unter Ressourcen Validieren des Orchestrierungsdelegierten beinhaltet, wobei der Orchestrierungsdelegierte in einer Edge- und/oder Fog- und/oder Cloud-Computing-Entität implementiert ist.

12. Computerlesbares Medium, das Anweisungen beinhaltet, die bei Ausführung durch die Einrichtung nach einem der Ansprüche 1 bis 8 das Verfahren nach einem der Ansprüche 9-11 implementieren.

## Revendications

1. Appareil orchestrateur (1020 - 1024) comprenant :
une interface (1214) pour :
recevoir un service à exécuter ; et
surveiller l'exécution du service ;
un délégué d'orchestration (1216-1218) pour :
sélectionner des ressources, lesquelles ressources sont mises en œuvre dans au moins l'une d'une entité d'informatique en périphérie, en brouillard ou en nuage (1030-1034) ; et
orchestrer le déploiement du service pour l'exécuter à l'aide des ressources sélectionnées ; et un gestionnaire d'orchestration délégué (1212) pour :
gérer le délégué d'orchestration en fonction (a) d'informations provenant de l'interface et (b) d'informations correspondant à l'exécution du service par le délégué d'orchestration ; et
dans lequel l'appareil orchestrateur est en communication avec un orchestrateur périphérique (1010) pour recevoir des instructions provenant de l'orchestrateur périphérique concernant l'exécution du service ;
dans lequel l'appareil orchestrateur fait partie d'un maillage d'orchestrateurs devant être gérés par l'orchestrateur périphérique ; et
dans lequel le service a été délégué à l'appareil orchestrateur depuis un autre orchestrateur du maillage d'orchestrateurs par l'orchestrateur périphérique.

2. Appareil selon la revendication 1, dans lequel le délégué d'orchestration et le gestionnaire d'orchestration délégué doivent ajuster l'allocation de ressources pour se conformer à un contrat associé à l'exécution du service.

3. Appareil selon la revendication 2, dans lequel l'ajustement de l'allocation de ressources doit se produire à travers des entités de calcul de bord.

4. Appareil selon la revendication 1, dans lequel l'appareil orchestrateur est instancié dans au moins l'une d'une entité d'informatique en périphérie, en brouillard ou en nuage.

5. Appareil selon la revendication 1, dans lequel le délégué d'orchestration doit être instancié sur une première entité informatique et dans lequel le service est déployé pour s'exécuter en utilisant des ressources sur une seconde entité informatique.

6. Appareil selon la revendication 1, comprenant en outre une pluralité de délégués d'orchestration pour orchestrer une pluralité de services.

7. Appareil selon la revendication 1, comprenant en outre une pluralité d'interfaces pour recevoir le service à exécuter, pour surveiller l'exécution du service, et pour extraire des informations historiques pour évaluer les performances dans le temps.

8. Appareil selon la revendication 1, comprenant en outre un certificateur pour valider le délégué d'orchestration.

9. Procédé d'orchestration d'exécution d'un service dans un environnement informatique en périphérie, le procédé comprenant :
le traitement (1610), par exécution d'une instruction par au moins un processeur, d'une requête d'exécution d'un service dans une infrastructure en nuage périphérique ; l'allocation (1620), par exécution d'une instruction par l'au moins un processeur, d'une exécution du service parmi des ressources via au moins un orchestrateur ;
la surveillance (1630) de l'exécution du service ; et lorsque l'exécution surveillée du service ne satisfait pas la requête, l'ajustement, à l'aide de l'au moins un orchestrateur, de l'allocation des ressources pour l'exécution du service ; et
l'au moins un orchestrateur faisant partie d'un maillage d'orchestrateurs devant être gérés par un orchestrateur périphérique, et l'ajustement de l'allocation des ressources se produisant en communication avec l'orchestrateur périphérique ; et
le service ayant été délégué à l'au moins un orchestrateur depuis un autre orchestrateur du maillage d'orchestrateurs par l'orchestrateur périphérique.

10. Procédé selon la revendication 9, dans lequel l'allocation d'exécution du service parmi des ressources comprend :
la génération d'un délégué d'orchestration pour sélectionner des ressources et orchestrer le déploiement du service à exécuter à l'aide des ressources sélectionnées ; et
le déploiement du délégué d'orchestration pour gérer l'allocation des ressources et l'exécution du service.

11. Procédé selon la revendication 10, dans lequel l'allocation de l'exécution du service parmi les ressources comprend la validation du délégué d'orchestration, le délégué d'orchestration étant mis en œuvre dans au moins l'une d'une entité d'informatique en périphérie, en brouillard ou en nuage.

12. Stockage lisible par ordinateur incluant des instructions qui, lorsqu'elles sont exécutées par l'appareil selon l'une quelconque des revendications 1 à 8, mettent en œuvre le procédé l'une quelconque des revendications 9 à 11.
